# EUROPEAN PATENT APPLICATION

(11) **EP 1 810 995 A1**
(43) Date of publication of application: **25.07.2007**
(21) Application number: 05795910.8
(22) Date of filing: 20.10.2005
(51) Int. Cl.: C08L 95/00, C08F 4/06, C08K 5/00, C08L 33/06, C08L 63/00, C08L 101/10, C09J 133/06, C09J 163/00, C09J 195/00, C09J 201/10, C09K 3/00, C09K 3/10, E01C 7/26, E04D 7/00

(54) **CURABLE COMPOSITION**

(30) Priority: 25.10.2004 JP 2004310131
(71) Applicant: Kaneka Corporation, Kita-ku Osaka-shi, Osaka 530-8288 (JP)
(72) Inventor: KAWAKAMI, Atsushi, Takasago-shi, Hyogo 6760026 (JP); ANDO, Katsuhiro, 6740067, Hyogo (JP)
(74) Representative: Vossius & Partner
(86) International application number: PCT/JP2005/019341
(87) International publication number: WO 2006/046474

(57) **Abstract**

Disclosed is a solvent-free, room temperature-curable composition which has excellent water-resistant adhesion, storage stability and curability and does not generate fumes or odors during application. Specifically, disclosed is a curable composition containing a bituminous substance (A) and vinyl polymer (B) having a reactive silicon group crosslinkable by forming a siloxane bond through a silanol condensation reaction wherein the main chain is produced by living radical polymerization. Such a curable composition is excellent in water-resistant adhesion, storage stability and curability, and does not generate fumes or odors during application.

## Description

### FIELD OF THE INVENTION

The present invention relates to a curable composition containing a bituminous substance and a vinyl polymer having a reactive silicon group and whose main chain is produced by living radical polymerization. The present invention also relates to an adhesive for tiles, a waterproof material, a road-paving material, a water-stopping material for civil engineering, and a damping material.

### BACKGROUND OF THE INVENTION

Bituminous substances such as asphalt are widely used as a convenient material in many fields such as a road-paving material, a roofing material, a sealing material, an adhesive, a waterway lining material, a damping material, and a soundproof material because such substances are excellent in tackiness, workability, and water-proofing property and are inexpensive.

For example, if an asphalt is used as a roofing material, so-called hot-applied asphalt waterproofing roofing process, comprising laminating a plurality of layers of asphalt to form a waterproofing layer has been actively employed as the mainstream of waterproofing works. Although this process provides satisfactorily high waterproofing reliability, the molten asphalt generates a large amount of fumes and odors upon melting asphalt. As a result, significant pollution of the surrounding environment occurs. Thus, this process has been avoided in thickly housed areas and central urban areas, and the applicable area has been limited. Furthermore, there is a tendency to avoid hot-applied asphalt waterproofing roofing process since workers may face dangers of burn injury.

In order to overcome these problems, an autohesion roofing process, which is one of cold roofing methods, has been developed and gaining popularity in this field. However, in this process, a large number of sheets of paper released during the working must be discarded. The disposal of the released paper is causing a serious problem.

In addition, blown asphalt prepared by air blowing is generally used as a roofing material. Considering performances, however, the blown asphalt is generally brittle and easily cracks at low temperature because of its hardness and breaking of materials due to ambient temperature. On the other hand, asphalt having satisfactory low temperature properties may exhibit unacceptable fluidity or deformation during a summer season. To overcome this problem, an epoxy resin-asphalt system and the like have been developed. Consequently, rutting resistance in a summer season has been improved by imparting strength to the asphalt. However, the problem of cracking in the winter season has not been solved yet.

Recently, in order to improve the occurrence of cracks, trials of adding a rubber modifier such as natural rubber, styrene-butadiene rubber, or chloroprene rubber to provide elasticity have been performed (for example, see Patent Document 1). However, it is difficult to produce a homogeneous composition since these rubber modifiers have low compatibility with asphalt. Therefore, long time stirring under heating at a high temperature is required during dispersion, and thus the modification of asphalt due to the rubber modifier tends to be insufficient. As a result, adhesiveness to base materials becomes insufficient and the waterproof and water stopping performances are not satisfied.
[Patent document 1]: Japanese Unexamined Patent Application Publication No. 10-279808

### DISCLOSURE OF THE INVENTION

### - Problem which the invention is to solve

It is an object of the present invention to provide a solvent free cold-setting asphalt composition that generates neither a fume nor an odor during working, and causes no volatilization of a solvent.

### - Means for solving the problem

In order to solve the above-described problems, the inventors of the present invention have conducted intensive studies and consequently found that a curable composition that can solve the above problems is produced by combining a vinyl polymer which has a reactive silicon group and whose main chain is produced by living radical polymerization with a bituminous substance. As a result, the present invention has been made.

Specifically, the present invention provides the following items (1) to (23):
(1) A curable composition containing a bituminous substance (A) and a vinyl polymer (B) having a reactive silicon group represented by the general formula (1):

   -Si(R¹₃₋ₐ)Yₐ ··· (1)

   in the formula, R¹ represents an alkyl group having 1 to 20 carbon atoms, an aryl group having 6 to 20 carbon atoms, an aralkyl group having 7 to 20 carbon atoms, or a triorganosiloxy group represented by (R'O)₃Si-, and when two R¹s are present, they may be the same or different. The vinyl polymer (B) has a main chain produced by living radical polymerization. R' represents a monovalent hydrocarbon group having 1 to 20 carbon atoms and the three R's may be the same or different. Y represents a hydroxyl group or a hydrolyzable group, and when two or more Ys are present, they may be the same or different a represents 1, 2, or 3).
(2) The curable composition described in the item (1) above,
   wherein the main chain of the vinyl polymer (B) is produced by polymerizing mainly at least one monomer selected from the group consisting of (meth)acrylic monomers, acrylonitrile monomers, aromatic vinyl monomers, fluorine-containing vinyl monomers, and silicon-containing vinyl monomers;
(3) The curable composition described in the item (1) or item (2) above,
   wherein the main chain of the vinyl polymer (B) is a (meth)acrylic polymer;
(4) The curable composition described in any one of the items (1) to (3) above,
   wherein the main chain of the vinyl polymer (B) is an acrylic polymer;
(5) The curable composition described in the item (4) above,
   wherein the main chain of the vinyl polymer (B) is an acrylate polymer;
(6) The curable composition described in any one of the items (1) to (5) above,
   wherein the main chain of the vinyl polymer (B) is produced by atom transfer radical polymerization;
(7) The curable composition described in the item (6) above,
   wherein, in the atom transfer radical polymerization, a complex selected from transition metal complexes including, as a central metal, an element selected from Group 7, Group 8, Group 9, Group 10, and Group 11 in the periodic table is used as a catalyst;
(8) The curable composition described in the item (7) above,
   wherein the complex used as the catalyst is a complex selected from the group consisting of complexes of copper, nickel, ruthenium, or iron;
(9) The curable composition described in any one of the items (1) to (8) above,
   further containing a plasticizer (C);
(10) The curable composition described in the item (9) above,
   wherein the plasticizer (C) is an aromatic oligomer or a completely or partially hydrogenated product of an aromatic oligomer;
(11) The curable composition described in the item (9) above,
   wherein the plasticizer (C) is a sulfonate compound or a sulfonamide compound;
(12) The curable composition described in any one of the items (1) to (11) above,
   further including an epoxy resin (D);
(13) The curable composition described in the item (12) above,
   wherein the content of the epoxy resin (D) is 5 to 120 parts by weight relative to 100 parts by weight of the bituminous substance (A);
(14) The curable composition described in any one of the items (1) to (13) above,
   further including an alkyl (meth) acrylate polymer (E) ;
(15) The curable composition described in the item (14) above,
   wherein the molecular chain of the alkyl (meth)acrylate polymer (E) is a copolymer including
   - an alkyl (meth)acrylate monomer unit (a) containing an alkyl group having 1 to 8 carbon atoms and
   - an alkyl (meth)acrylate monomer unit (b) containing an alkyl group having at least 10 carbon atoms;
(16) The curable composition described in any one of the items (1) to (15) above,
   further including a tackifier resin (F);
(17) The curable composition described in the item (16) above,
   wherein the tackifier resin (F) is a tackifier resin modified with phenol and/or an alkyl phenol;
(18) The curable composition described in any one of the items (1) to (17) above,
   wherein the bituminous substance (A) includes a natural asphalt and/or a petroleum asphalt;
(19) An adhesive for tiles, containing
   the curable composition described in any one of the items (1) to (18) above;
(20) A waterproof material containing
   the curable composition described in any one of the items (1) to (18) above;
(21) A road-paving material containing
   the curable composition described in any one of the items (1) to (18) above;
(22) A water-stopping material for civil engineering,
   the water-stopping material containing the curable composition described in any one of the items (1) to (18) above; and
(23) A damping material containing
   the curable composition described in any one of the items (1) to (18) above.

### - Effect of the invention

Use of the curable composition of the present invention can provide a curable composition having excellent water resistance, curability, and storage stability. And such a curable composition does not require heat melting during working and is free of neither a fume nor an odor.

### BEST MODE FOR CARRYING OUT THE INVENTION

Examples of a bituminous substance (A) of the present invention include natural asphalt such as lake asphalt, e.g., Trinidad epure, gilsonite, and pyrobitumen, and rock asphalt, and cutback asphalt containing these; petroleum asphalt and petroleum pitch such as straight asphalt and blown asphalt, which are produced in a petroleum refining process, and cutback asphalt containing these; mixed bituminous substances such as pitch bitumen and a pitch mixture; and petroleum process oil such as cycle oil from heavy catalytically cracked cycle oil, light catalytically cracked cycle oil, lubricating oil, distillation fraction of these oils or other distillation fraction subjected to treatment such as extraction, refining, hydrogenation, or the like. The bituminous substance (A) may be a mixture of at least two of the above substances. In particular, straight asphalt produced in a petroleum refining process is more preferable from the viewpoint that compatibility with the component (B) and stable dispersibility can be produced. The vinyl polymer (B) of the present invention, i.e., the vinyl polymer which has a reactive silicon group and whose main chain is produced by living radical polymerization, can be produced by the following methods.

### «Vinyl polymer (B) whose main chain is produced by living radical polymerization»

### <Main chain>

A vinyl monomer constituting the main chain of the vinyl polymer (B) of the present invention is not particularly limited and various monomers may be used. Examples of such a vinyl monomer include (meth) acrylic monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, y-(methacryloyloxypropyl) trimethoxysilane, ethylene oxide adducts of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate; aromatic vinyl monomers such as styrene, vinyltoluene, α-methylstyrene, chlorostyrene, styrenesulfonic acid, and salts thereof; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, monoalkyl maleate, and dialkyl maleate; fumaric acid, monoalkyl fumarate, and dialkyl fumarate; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; acrylonitrile monomers such as acrylonitrile and methacrylonitrile; amido group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride, vinylidene chloride, allyl chloride, and allyl alcohol. These monomers may be used alone or a plurality of these monomers may be copolymerized.

The main chain of the vinyl polymer (B) is preferably produced by polymerizing mainly at least one monomer selected from the group consisting of (meth)acrylic monomers, acrylonitrile monomers, aromatic vinyl monomers, fluorine-containing vinyl monomers and silicon-containing vinyl monomers. Herein, the term "mainly" means that the content of the above monomer is 50 percent by mol or more, preferably 70 percent by mol or more of the monomer units constituting the vinyl polymer (B).

Among these, in view of physical properties of a product or the like, styrene monomers and (meth) acrylic monomers are preferred, acrylate monomers and methacrylate monomers are more preferred. Acrylate monomers are particularly preferred, and butyl acrylate is further preferred. In the present invention, these preferable monomers may be copolymerized with other monomers, and furthermore, may be copolymerized with other monomers to produce a block polymer. In such a case, the content of the preferable monomers is preferably 40 percent by weight or more. In the above expression, for example, (meth)acrylic acid represents acrylic acid and/or methacrylic acid.

For an application requiring rubber elasticity, the glass transition temperature of the vinyl polymer is preferably lower than a room temperature or a temperature of used condition, although is not limited to this.

The molecular weight distribution of the vinyl polymer (B), that is, the ratio (Mw/Mn) of the weight-average molecular weight (Mw) to the number average molecular weight (Mn) measured by gel permeation chromatography, is not particularly limited. The molecular weight distribution of the vinyl polymer (B) is preferably less than 1.8, more preferably 1.6 or less, and particularly preferably 1.3 or less. In the GPC measurement in the present invention, in general, chloroform is used as a mobile phase and a polystyrene gel column is used for the measurement. The number average molecular weight and the like are determined on the polystyrene equivalent basis.

The number average molecular weight of the vinyl polymer (B) in the present invention is not particularly limited. However, the number average molecular weight is preferably in a range of 500 to 1,000,000, more preferably, 5,000 to 50,000 when measured by gel permeation chromatography.

### <Method of synthesizing main chain>

A method of synthesizing the vinyl polymer (B) in the present invention is limited to living radical polymerization among controlled radical polymerization methods. Atom transfer radical polymerization is preferable. These methods will be described below.

### - Controlled radical polymerization

Radical polymerization methods are classified into the "ordinary radical polymerization method (free radical polymerization method)" in which a monomer having a specific functional group and a vinyl monomer are merely copolymerized using a polymerization initiator such as an azo compound, a peroxide, or the like, and the "controlled radical polymerization method" in which a specific functional group can be introduced into a controlled site such as a terminus.

The "ordinary radical polymerization method" is simple and easy to perform. In the method, however, a monomer having a specific functional group is introduced into the polymer only at random. This method is disadvantageous in that, in order to produce a polymer with a high functionality, a considerable amount of such a monomer having a specific functional group must be used. Conversely, when only a small amount of such a monomer is used, the ratio of a polymer not containing this specific functional group increases. Furthermore, the method belonging to free radical polymerization can only produce polymers having a wide molecular weight distribution and a high viscosity are produced.

The "controlled radical polymerization method" is further classified into the "chain transfer agent method" in which polymerization is performed using a chain transfer agent having a specific functional group to provide functional group-terminated vinyl polymers, and the "living radical polymerization method" in which growing polymerization termini grows without undergoing termination reactions or the like reaction to provide polymers having a molecular weight approximately as designed.

Although the "chain transfer agent method" can provide polymers having high functionality, the method requires a considerable amount of a chain transfer agent having a specific functional group relative to an initiator. Therefore, the "chain transfer agent method" has economical problems including treatment cost. As in the "ordinary radical polymerization method", only polymers having a wide molecular weight distribution and a high viscosity are produced because the chain transfer agent method also belongs to free radical polymerization.

Unlike these polymerization methods, the "living radical polymerization method" hardly undergoes termination reactions and provides polymers having a narrow molecular weight distribution (Mw/Mn of about 1.1 to about 1.5), although the living radical polymerization method belongs to radical polymerization, which is generally regarded as difficult to control because the rate of polymerization is high and termination reactions due to, for example, coupling between radicals easily occur. And the method allows the molecular weight to be arbitrarily controlled by changing the charging ratio between a monomer and an initiator.

The "living radical polymerization method" can provide polymers having a narrow molecular weight distribution and a low viscosity. In addition, this method allows monomers having a specific functional group to introduce into almost any position of the polymers. Therefore, the living radical polymerization method is more preferable as the method for producing the vinyl polymers having a specific functional group.

The term "living polymerization", in its narrow sense, means polymerization in which molecular chains grow while maintaining activity at their termini. In general, however, the living polymerization also includes pseudo-living polymerization in which molecular chains grow in equilibrium between inactivated termini and activated termini. The latter definition applies to the present invention.

Recently, the "living radical polymerization method" has actively been studied by a large number of groups. Examples include a study using a cobalt porphyrin complex, as described in the Journal of the American Chemical Society (J. Am. Chem. Soc.), 1994, Vol. 116, p. 7943, a study using a radical scavenger such as a nitroxide compound, as described in Macromolecules, 1994, Vol. 27, p. 7228, and a study as to "atom transfer radical polymerization (ATRP)" using an organic halide or the like as an initiator and a transition metal complex as a catalyst.

Among the "living radical polymerization methods", the "atom transfer radical polymerization method", in which a vinyl monomer is polymerized using an organic halide, a halogenated sulfonyl compound, or the like as an initiator and a transition metal complex as a catalyst, is more preferable for the method for producing vinyl polymers having a specific functional group. This is because this method not only has the features of the "living radical polymerization" but also provides polymers having a terminal halogen atom that is relatively advantageous to conduct a conversion reaction of functional groups. In addition, an initiator and a catalyst can be designed with a high degree of freedom. Examples of this atom transfer radical polymerization are described by Matyjaszewski et al., Journal of the American Chemical Society (J. Am. Chem. Soc.) 1995, Vol. 117, p. 5614; Macromolecules 1995, Vol. 28, p. 7901; Science 1996, Vol. 272, p. 866; PCT Publication Nos. WO 96/30421, WO 97/18247, WO 98/01480, and WO 98/40415; and by Sawamoto et al., Macromolecules 1995, Vol. 28, p. 1721; and Japanese Unexamined Patent Application Publication Nos. 9-208616 and 8-41117.

In the present invention, which of the above living radical polymerization methods is to be employed is not particularly limited, but the atom transfer radical polymerization is preferable.

The living radical polymerization will be described in detail below. Prior thereto, polymerization using a chain transfer agent, which is one of controlled radical polymerization methods usable for producing the vinyl polymer described below, is described. The radical polymerization using a chain transfer agent (telomer) is not particularly limited but exemplified by the following two methods for producing vinyl polymers having a terminal structure suitable for the present invention.

Namely, one is a method for producing halogen-terminated polymers using a halogenated hydrocarbon as a chain transfer agent, as described in Japanese Unexamined Patent Application Publication No. 4-132706. The other is a method of producing hydroxyl-terminated polymers using a hydroxyl-containing mercaptan or a hydroxyl-containing polysulfide or the like as a chain transfer agent, as described in Japanese Unexamined Patent Application Publication No. 61-271306, Japanese Patent No. 2594402, or Japanese Unexamined Patent Application Publication No. 54-47782.

The living radical polymerizations will now be described.

Among them, the method using a radical scavenger such as a nitroxide compound will be described at first. In this polymerization, a nitroxy free radial (=N-O·), which is generally stable, is used as a radical capping agent. Preferred examples of such a compound include, but are not limited to, cyclic hydroxyamine-derived nitroxy free radicals such as 2,2,6,6-substituted-1-piperidinyloxy radicals and 2,2,5,5-substituted-1-piperidinyloxy radicals. The substituents are preferably alkyl groups having 4 or less of carbon atoms, such as methyl group and ethyl group. Specific examples of nitroxy free radical compounds include, but are not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-tert-butylaminoxy radical. Other stable free radicals such as galvinoxyl free radical may also be used instead of nitroxy free radicals.

The above radical capping agent is used in combination with a radical generator. It is believed that a reaction product produced from a radical capping agent and a radical generator function as a polymerization initiator to allow the polymerization of a monomer capable of addition-polymerization to proceed. Although the ratio between both is not particularly limited, the radical initiator is used appropriately in an amount of 0.1 to 10 moles per mole of the radical capping agent.

Various compounds can be used as the radical generator, but peroxides capable of generating a radical under a polymerization temperature condition are preferable. Examples of such peroxides include, but are not limited to, diacyl peroxides such as benzoyl peroxide and lauroyl peroxide; dialkyl peroxides such as dicumyl peroxide and di-tert-butyl peroxide; peroxycarbonates such as diisopropyl peroxydicarbonate and bis(4-tert-butylcyclohexyl) peroxydicarbonate; and alkyl peresters such as tert-butyl peroxyoctoate and tert-butyl peroxybenzoate. In particular, benzoyl peroxide is preferable. Furthermore, other radical generators such as radical-generating azo compounds, e.g., azobisisobutyronitrile, can also be used instead of peroxides.

Alkoxyamine compounds such as those illustrated below may be used as initiators instead of combination of a radical capping agent and a radical generator, as reported in Macromolecules, 1995, Vol. 28, p. 2993.

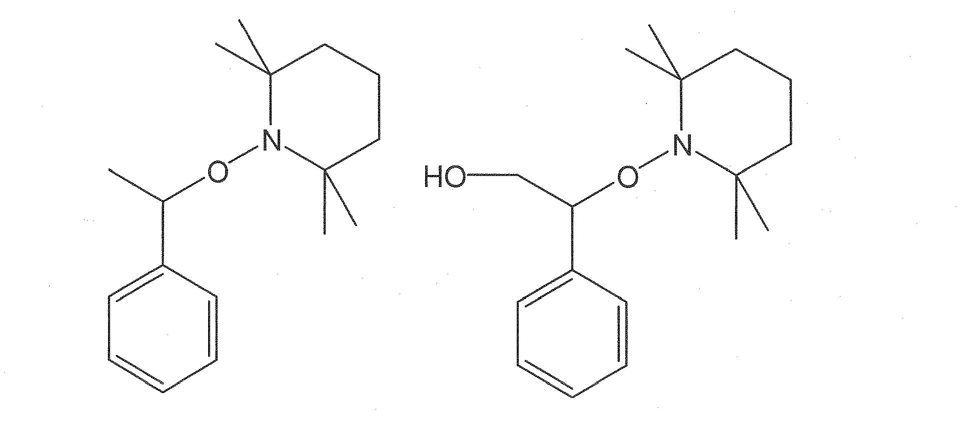

If the alkoxyamine compound used as an initiator is one having a functional group such as a hydroxyl group, as illustrated above, functional group-terminated polymers are produced. When this method is applied to the present invention, functional group-terminated polymers are produced.

The polymerization conditions including the monomer, solvent, and polymerization temperature used in the above polymerization using a radical scavenger such as a nitroxide compound are not particularly limited, but may be the same as those used in the atom transfer radical polymerization described below.

### - Atom transfer radical polymerization

The atom transfer radical polymerization method, which is more preferable as the living radical polymerization in the present invention, will now be described.

In this atom transfer radical polymerization, an organic halide, in particular, an organic halide having a highly reactive carbon-halogen bond (e.g. a carbonyl compound having a halogen at an α-position or a compound having a halogen at a benzyl position), a halogenated sulfonyl compound, or the like is used as an initiator.

Specific examples of such compounds include C₆H₅-CH₂X,C₆H₅-C(H)(X)CH₃andC₆H₅-C(X)(CH₃)₂ (in the above chemical formulae, C₆H₅ represents a phenyl group and X represents a chlorine, bromine, or iodine atom);
R²-C(H)(X)-CO₂R³,R²-C(CH₃)(X)-CO₂R³,R²-C(H)(X)-C(O)R³, and R²-C(CH₃)(X)-C(O)_{R}³ (wherein each of R² and R³ represents a hydrogen atom
or an alkyl, aryl, or aralkyl group having 1 to 20 carbon atoms and X represents a chlorine, bromine, or iodine atom); and

R²-C₆H₄-SO₂X

(wherein R² represents a hydrogen atom or an alkyl, aryl, or aralkyl group having 1 to 20 carbon atoms and X represents a chlorine, bromine, or iodine atom).

An organic halide or halogenated sulfonyl compound further having both the functional group for initiating the polymerization and another functional group may also be used as the initiator in the atom transfer radical polymerization. In such a case, vinyl polymers having the functional group at one of the main chain termini and a growing terminal structure of atom transfer radical polymerization at the other main chain terminus are produced. Examples of such a functional group include alkenyl, crosslinkable silyl, hydroxyl, epoxy, amino, and amido groups.

The organic halide having an alkenyl group is not particularly limited. Examples of such an organic halide having an alkenyl group include compounds having a structure represented by the general formula (2):

R⁵R⁶C(X)-R⁷-R⁸-C(R⁴)=CH₂ ··· (2)

(wherein R⁴ represents a hydrogen atom or a methyl group, each of R⁵ and R⁶ represents a hydrogen atom or a monovalent alkyl, aryl, or aralkyl group having 1 to 20 carbon atoms and such R⁵ and R⁶ may be connected to each other at the respective other ends, R⁷ represents -C(O)O- (ester group), -C(O)- (keto group), or an o-, m-, or p-phenylene group, R⁸ represents a direct bond or a divalent organic group having 1 to 20 carbon atoms, which may include at least one ether bond, and X represents a chlorine, bromine, or iodine atom).

Specific examples of such substituents R⁵ and R⁶ include a hydrogen atom, methyl, ethyl, n-propyl, isopropyl, butyl, pentyl, and hexyl groups. R⁵ and R⁶ may be connected to each other at the respective other ends to form a cyclic skeleton.

Specific examples of such an organic halide represented by the general formula (2), the organic halide having an alkenyl group, include
XCH₂C(O)O(CH₂)ₙCH=CH₂, H₃CC(H)(X)C(O)O(CH₂)ₙCH=CH₂,
(H₃C)₂C(X)C(O)O(CH₂)ₙCH=CH₂,
CH₃CH₂C(H)(X)C(O)O(CH₂)ₙCH=CH₂, and 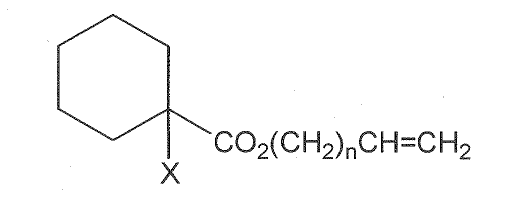
(in the above formulae, X represents a chlorine, bromine, or iodine atom and n represents an integer of 0 to 20);
XCH₂C(O)O(CH₂)ₙO(CH₂)ₘCH=CH₂,
H₃CC(H)(X)C(O)O(CH₂)ₙO(CH₂)ₘCH=CH₂,
(H₃C)₂C(X)C(O)O(CH₂)nO(CH₂)ₘCH=CH₂,
CH₃CH₂C(H)(X)C(O)O(CH₂)ₙO(CH₂)ₘCH=CH₂, and 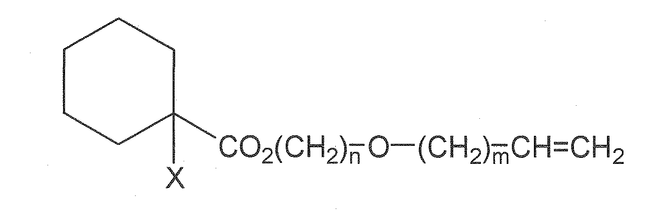
(in the above formulae, X represents a chlorine, bromine, or iodine atom, n represents an integer of 0 to 20, and
m represents an integer of 1 to 20);
o-, m-, p-XCH₂-C₆H₄-(CH₂)ₙ-CH=CH₂;
o-, m-, p-CH₃C(H)(X)-C₆H₄-(CH₂)ₙ-CH=CH₂; and
o-, m-, p-CH₃CH₂C(H) (X)-C₆H₄-(CH₂)ₙ-CH=CH₂
(in the above formulae, X represents a chlorine, bromine, or iodine atom and n represents an integer of 0 to 20);
o-, m-, p-XCH₂-C₆H₄-(CH₂)ₙ-O-(CH₂)ₘ-CH=CH₂;
O-, m-, p-CH₃C(H)(X)-C₆H₄-(CH₂)ₙ-O-(CH₂)ₘ-CH=CH₂; and
O-, m-, p-CH₃CH₂C(H)(X)-C₆H₄-(CH₂)ₙ-O-(CH₂)ₘCH=CH₂
(in the above formulae, X represents a chlorine, bromine, or iodine atom, n represents an integer of 0 to 20, and
m represents an integer of 1 to 20);
o-, m-, p-XCH₂-C₆H₄-O-(CH₂)ₙ-CH=CH₂;
o-, m-, p-CH₃C(H)(X)-C₆H₄-O-(CH₂)ₙ-CH=CH₂; and
o-, m-, p-CH₃CH₂C(H)(X)-C₆H₄-O-(CH₂)ₙ-CH=CH₂
(in the above formulae, X is a chlorine, bromine, or iodine atom and n represents an integer of 0 to 20);
O-, m-, p-XCH₂-C₆H₄-O-(CH₂)ₙ-O-(CH₂)ₘ-CH=CH₂;
O-, m-, p-CH₃C(H)(X)-C₆H₄-O-(CH₂)ₙ-O-(CH₂)ₘ-CH=CH₂; and
O-, m-, p-CH₃CH₂C(H)(X)-C₆H₄-O-(CH₂)ₙ-O-(CH₂)ₘ-CH=CH₂
(in the above formulae, X represents a chlorine, bromine, or iodine atom, n represents an integer of 0 to 20, and m represents an integer of 1 to 20).

Other examples of such an organic halide having an alkenyl group include compounds represented by the general formula (3):

H₂C=C(R⁴)-R⁸-C(R⁵)(X)-R⁹-R⁶ ··· (3)

(wherein R⁴, R⁵, R⁶, R⁸, and X are the same as the above and R⁹ represents a direct bond, -C(O)O- (ester group), -C(O)- (keto group), or an o-, m-, or p-phenylene group).

R⁸ represents a direct bond or a divalent organic group (which may include at least one ether bond) having 1 to 20 carbon atoms. When R⁸ is a direct bond, a vinyl group is bound to the carbon atom to which a halogen is bound, thus forming an allyl halide compound. In this case, since the carbon-halogen bond is activated by the adjacent vinyl group, R⁹ is not always required to be a C(O)O group or a phenylene group, but may be a direct bond. When R⁸ is not a direct bond, R⁹ is preferably a C(O)O, C(O), or phenylene group so that the carbon-halogen bond is activated.

Specific examples of such compounds represented by the general formula (3) include
CH₂=CHCH₂X, CH₂=C(CH₃)CH₂X, CH₂=CHC(H)(X)CH₃,
CH₂=C(CH₃)C(H)(X)CH₃, CH₂=CHC(X)(CH₃)₂,
CH₂=CHC(H)(X)C₂H₅, CH₂=CHC(H)(X)CH(CH₃)₂,
CH₂=CHC(H)(X)C₆H₅, CH₂=CHC(H)(X)CH₂C₆H₅,
CH₂=CHCH₂C(H)(X)-CO₂R¹⁰, CH₂=CH(CH₂)₂C(H)(X)-CO₂R¹⁰,
CH₂=CH(CH₂)₃C(H)(X)-CO₂R¹⁰, CH₂=CH(CH₂)₈C(H)(X)-CO₂R¹⁰,
CH₂=CHCH₂C(H)(X)-C₆H₅, CH₂=CH(CH₂)₂C(H)(X)-C₆H₅, and
CH₂=CH(CH₂)₃C(H)(X)-C₆H₅
(in the above formulae, X represents a chlorine, bromine, or iodine atom and R¹⁰ represents an alkyl, aryl, or aralkyl group having 1 to 20 carbon atoms).

Specific examples of such a halogenated sulfonyl compound having an alkenyl group include
o-, m-, p-CH₂=CH-(CH₂)ₙ-C₆H₄-SO₂X and
o-, m-, p-CH₂=CH-(CH₂)ₙ-O-C₆H₄-SO₂X
(in the above formulae, X represents a chlorine, bromine, or iodine atom and n represents an integer of 0 to 20).

The above organic halide having a crosslinkable silyl group is not particularly limited. Examples of such an organic halide having a crosslinkable silyl group include compounds having a structure represented by the general formula (4):

R⁵R⁶C(X)-R⁷-R⁸-C(H)(R⁴)CH₂-Si(R¹)₃₋ₐ(Y)ₐ ··· (4)

(wherein R⁴, R⁵, R⁶, R⁷, R⁸, and X are the same as the above; R¹ represents an alkyl, aryl, or aralkyl group having 1 to 20 carbon atoms or a triorganosiloxy group represented by (R')₃SiO- (wherein R' is a monovalent hydrocarbon group having 1 to 20 carbon atoms and the three R's may be the same or different), and when two or more R¹s are present, they may be the same or different; Y represents a hydroxyl group or a hydrolyzable group, and when two or more Ys are present, they may be the same or different; and a represents 1, 2, or 3).

Specific examples of such a compounds represented by the general formula (4) include
XCH₂C(O)O(CH₂)ₙSi(OCH₃)₃,
CH₃C(H)(X)C(O)O(CH₂)ₙSi(OCH₃)₃,
(CH₃)₂C(X)C(O)O(CH₂)ₙSi(OCH₃)₃,
XCH₂C(O)O(CH₂)ₙSi(CH₃)(OCH₃)₂,
CH₃C(H)(X)C(O)O(CH₂)ₙSi(CH₃)(OCH₃)₂, and
(CH₃)₂C(X)C(O)O(CH₂)ₙSi(CH₃)(OCH₃)₂
(in the above formulae, X represents a chlorine, bromine, or iodine atom and n represents an integer of 0 to 20); XCH₂C(O)O(CH₂)ₙO(CH₂)ₘSi(OCH₃)₃,
H₃CC(H)(X)C(O)O(CH₂)ₙO(CH₂)ₘSi(OCH₃)3,
(H₃C)₂C(X)C(O)O(CH₂)nO(CH₂)ₘSi(OCH₃)₃,
CH₃CH₂C(H)(X)C(O)O(CH₂)nO(CH₂)ₘSi(OCH₃)₃,
XCH₂C(O)O(CH₂)ₙO(CH₂)ₘSi(CH₃)(OCH₃)2,
H₃CC(H)(X)C(O)O(CH₂)ₙO(CH₂)ₘ-Si(CH₃)(OCH₃)₂,
(H₃C)₂C(X)C(O)O(CH₂)ₙO(CH₂)ₘ-Si(CH₃)(OCH₃)₂,and
CH₃CH₂C(H)(X)C(O)O(CH₂)ₙO(CH₂)ₘ-Si(CH₃)(OCH₃)₂
(in the above formulae, X represents a chlorine, bromine, or iodine atom, n represents an integer of 0 to 20, and
m represents an integer of 1 to 20);
o-, m-, p-XCH₂-C₆H₄-(CH₂)₂Si(OCH₃)₃;
o-, m-, p-CH₃C(H)(X)-C₆H₄-(CH₂)₂Si(OCH₃)₃;
o-, m-, p-CH₃CH₂C(H)(X)-C₆H₄-(CH₂)₂Si(OCH₃)₃;
o-, m-, p-XCH₂-C₆H₄-(CH₂)₃Si(OCH₃)₃;
o-, m-, p-CH₃C(H)(X)-C₆H₄-(CH₂)₃Si(OCH₃)₃;
o-, m-, p-CH₃CH₂C(H)(X)-C₆H₄-(CH₂)₃Si(OCH₃)₃;
o-, m-, p-XCH₂-C₆H₄-(CH₂)₂-O-(CH₂)₃Si(OCH₃)₃;
o-, m-, p-CH₃C(H)(X)-C₆H₄-(CH₂)₂-O-(CH₂)₃Si(OCH₃)₃;
o-, m-, p-CH₃CH₂C(H)(X)-C₆H₄-(CH₂)₂-O-(CH₂)₃Si(OCH₃)₃;
o-, m-, p-XCH₂-C₆H₄-O-(CH₂)₃Si(OCH₃)₃;
o-, m-, p-CH₃C(H)(X)-C₆H₄-O-(CH₂)₃Si(OCH₃)₃;
o-, m-, p-CH₃CH₂C(H)(X)-C₆H₄-O-(CH₂)₃-Si(OCH₃)₃;
o-, m-, p-XCH₂-C₆H₄-O-(CH₂)₂-O-(CH₂)₃-Si(OCH₃)₃;
O-, m-, p-CH₃C(H)(X)-C₆H₄-O-(CH₂)₂-O-(CH₂)₃Si(OCH₃)₃; and
o-, m-, p-CH₃CH₂C(H)(X)-C₆H₄-O-(CH₂)₂-O-(CH₂)₃Si(OCH₃)₃
(in the above formulae, X represents a chlorine, bromine, or iodine atom).

Examples of such an organic halide having a crosslinkable silyl group further include compounds having a structure represented by general formula (5):

(R¹)₃₋ₐ(Y)ₐSi-CH₂-C(H)(R⁴)-R⁸-C(R⁵)(X)-R⁹-R⁶ ··· (5)

(wherein R⁴, R⁵, R⁶, R⁸, R⁹, R¹, a, X, and Y are the same as the above).

Specific examples of such a compound include
(CH₃O)₃SiCH₂CH₂C(H)(X)C₆H₅,
(CH₃O)₂(CH₃)SiCH₂CH₂C(H)(X)C₆H₅,
(CH₃O)₃Si(CH₂)₂C(H)(X)-CO₂R¹⁰,
(CH₃O)₂(CH₃)Si(CH₂)₂C(H)(X)-CO₂R¹⁰,
(CH₃O)₃Si(CH₂)₃C(H)(X)-CO₂R¹⁰,
(CH₃O)₂(CH₃)Si(CH₂)₃C(H)(X)-CO₂R¹⁰,
(CH₃O)₃Si(CH₂)₄C(H)(X)-CO₂R¹⁰,
(CH₃O)₂(CH₃)Si(CH₂)₄C(H)(X)-CO₂R¹⁰,
(CH₃O)₃Si(CH₂)₉C(H)(X)-CO₂R¹⁰,
(CH₃O)₂(CH₃)Si(CH₂)₉C(H)(X)-CO₂R¹⁰,
(CH₃O)₃Si(CH₂)₃C(H)(X)-C₆H₅,
(CH₃O)₂(CH₃)Si(CH₂)₃C(H)(X)-C₆H₅,
(CH₃O)₃Si(CH₂)₄C(H)(X)-C₆H₅, and
(CH₃O)₂(CH₃)Si(CH₂)₄C(H)(X)-C₆H₅
(in the above formulae, X represents a chlorine, bromine or iodine atom and R¹⁰ represents an alkyl, aryl, or aralkyl group having 1 to 20 carbon atoms).

The above organic halide having a hydroxyl group or the halogenated sulfonyl compound having a hydroxyl group is not particularly limited. Examples of such a compound include

HO-(CH₂)ₘ-OC(O)C(H)(R²)(X)

(wherein X represents a chlorine, bromine, or iodine atom, R² represents a hydrogen atom or an alkyl, aryl, or aralkyl group having 1 to 20 carbon atoms, and m represents an integer of 1 to 20).

The above organic halide having an amino group or the halogenated sulfonyl compound having an amino group is not particularly limited. Examples of such a compound include

H₂N-(CH₂)ₘ-OC(O)C(H)(R²)(X)

(wherein X represents a chlorine, bromine, or iodine atom, R² represents a hydrogen atom or an alkyl, aryl, or aralkyl group having 1 to 20 carbon atoms, and m represents an integer of 1 to 20).

The above organic halide having an epoxy group or the halogenated sulfonyl compound having an epoxy group is not particularly limited. Examples of such a compound include 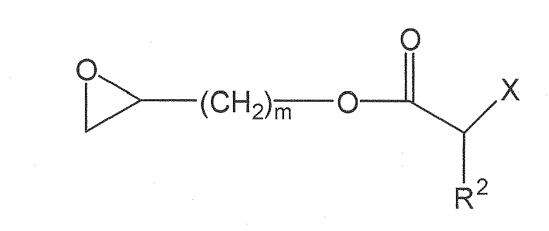 (wherein X represents a chlorine, bromine, or iodine atom, R² represents a hydrogen atom or an alkyl, aryl, or aralkyl group having 1 to 20 carbon atoms, and m represents an integer of 1 to 20).

In order to obtain polymers having at least two growing terminal structures in each molecule, an organic halide or a halogenated sulfonyl compound having at least two initiation sites is preferably used as the initiator. Specific examples of such a compound include

o,m,p-X-CH₂-C₆H₄-CH₂-X

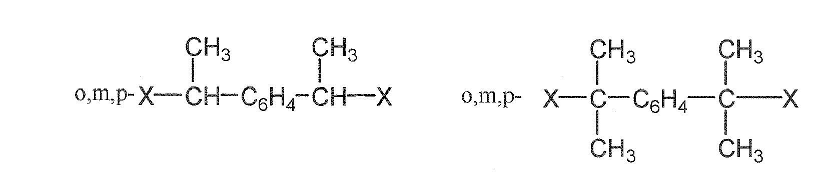

(wherein C₆H₄ represents a phenylene group and X represents a chlorine, bromine, or iodine atom) 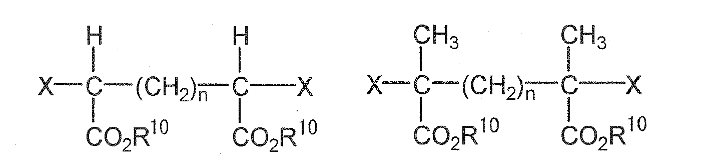 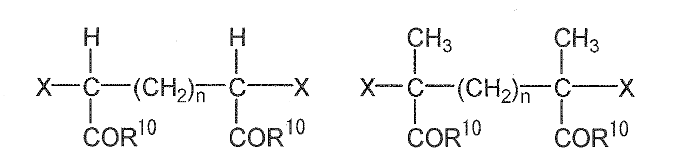 (wherein R¹⁰ represents an alkyl, aryl, or aralkyl group having 1 to 20 carbon atoms, n represents an integer of 0 to 20, and X represents a chlorine, bromine, or iodine atom) 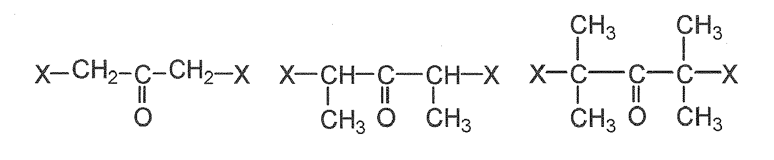 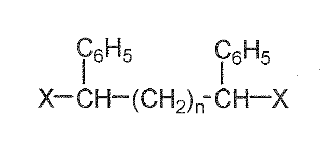 (wherein X represents a chlorine, bromine, or iodine atom and n represents an integer of 0 to 20) 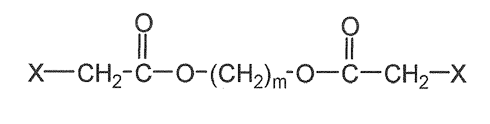 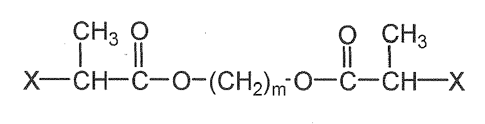 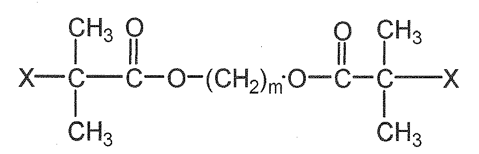 (wherein m represents an integer of 1 to 20 and X represents a chlorine, bromine, or iodine atom), and

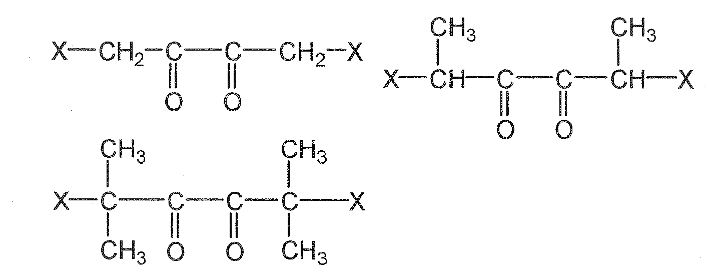

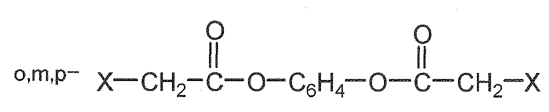

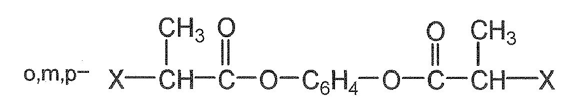

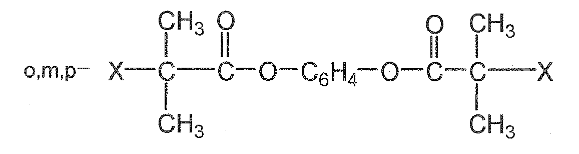

o,m,p- X-SO₂-C₆H₄-SO₂-X

(wherein X represents a chlorine, bromine, or iodine atom).

The vinyl monomers used in this polymerization are not particularly limited and all monomers mentioned above as examples can appropriately be used.

Although the transition metal complex used as the polymerization catalyst is not particularly limited, the transition metal complex preferably includes metal complexes including an element selected from Group 7, Group 8, Group 9, Group 10, and Group 11 in the periodic table as a central metal. More preferable example of such a transition metal complex include complexes of zero-valent copper, monovalent copper, divalent ruthenium, divalent iron, or divalent nickel. Among these, a copper complex is preferable. Specific examples of such a monovalent copper compound include cuprous chloride, cuprous bromide, cuprous iodide, cuprous cyanide, cuprous oxide, and cuprous perchlorate. If such a copper compound is used, a ligand, for example, 2,2'-bipyridyl or a derivative thereof, 1,10-phenanthroline or a derivative thereof, or a polyamine such as tetramethylethylenediamine, pentamethyldiethylenetriamine, or hexamethyl tris(2-aminoethyl)amine is added in order to increase catalytic activity. Preferred ligands are nitrogen-containing compounds, more preferred ligands are chelate type nitrogen-containing compound, and still more preferred ligands are N,N,N',N",N"-pentamethyldiethylenetriamine. Tris triphenylphosphine complex containing divalent ruthenium chloride (RuCl₂(PPh₃)₃) is also preferable as the catalyst. If such a ruthenium compound is used as the catalyst, an aluminum alkoxide is added as an activating agent. Furthermore, bis(triphenylphosphine) complex containing divalent iron (FeCl₂(PPh₃)₂), bis(triphenylphosphine) complex containing divalent nickel (NiCl₂(PPh₃)₂), and bis(tributylphosphine) complex containing divalent nickel (NiBr₂(PBu₃)₂) are also suitable for the catalyst.

The polymerization may be performed in a solvent-free system or in various solvents. Examples of such solvents include hydrocarbon solvents such as benzene and toluene; ether solvents such as diethyl ether and tetrahydrofuran; halogenated hydrocarbon solvents such as methylene chloride and chloroform; ketone solvents such as acetone, methyl ethyl ketone, and methyl isobutyl ketone; alcohol solvents such as methanol, ethanol, propanol, isopropanol, n-butyl alcohol, and tert-butyl alcohol; nitrile solvents such as acetonitrile, propionitrile, and benzonitrile; ester solvents such as ethyl acetate and butyl acetate; and carbonate solvents such as ethylene carbonate and propylene carbonate. These solvents may be used alone or in combinations of two or more solvents.

Although the temperature during the polymerization is not limited, the polymerization can be generally performed in a range of 0°C to 200°C and preferably in a range of 50°C to 150°C.

In the present invention, the atom transfer radical polymerization also includes the so-called reverse atom transfer radical polymerization. The reverse atom transfer radical polymerization is a method, in which an ordinary atom transfer radical polymerization catalyst in its high oxidation state resulting from radical generation, for example, Cu (II') when Cu (I) is used as the catalyst, is allowed to react with an ordinary radical initiator such as a peroxide. As a result, an equilibrium state as in atom transfer radical polymerization is produced (see, Macromolecules, 1999, 32, p. 2872).

### <Functional group>

### - The number of crosslinkable silyl groups

The vinyl polymer (B) has at least one crosslinkable silyl group. In view of curability of composition and physical properties of the cured product, the number of crosslinkable silyl groups is preferably 1.1 to 4.0, and more preferably 1.2 to 3.5 on average.

### Positions of crosslinkable silyl group

If rubber-like property is particularly required for the cured products prepared from the curable composition of the present invention, it is preferable that at least one of the crosslinkable silyl groups is located at a molecular chain terminus. This is because the molecular weight between crosslinking points, which significantly influences on the rubber elasticity, is made to be larger. It is more preferable that all crosslinkable functional groups are located at molecular chain termini.

Methods for producing the vinyl polymers (B), in particular (meth) acrylic polymers, having at least one crosslinkable silyl group at their molecular termini are disclosed in Japanese Examined Patent Application Publication Nos. 3-14068 and 4-55444, Japanese Unexamined Patent Application Publication No. 6-211922, and the like. These methods belong to the above-described free radical polymerization method using a "chain transfer agent method". Therefore, although the resultant polymers have crosslinkable functional groups at their molecular chain termini with a relatively high ratio, the polymers generally have a value of molecular weight distribution represented by Mw/Mn as high as 2 or more. Such a high value of molecular weight distribution leads to a problem that their viscosity becomes high. Accordingly, the "living radical polymerization method" is preferable to perform in order to produce a vinyl polymer having a narrow molecular weight distribution, a low viscosity, and crosslinkable functional groups at molecular chain termini with a high ratio.

These functional groups will now be described.

### - Crosslinkable silyl group

The crosslinkable silyl groups of the vinyl polymer (B) in the present invention include groups represented by the general formula (1) :

-Si(R¹₃₋ₐ)Yₐ ··· (1)

in the formula, R¹ represents an alkyl group having 1 to 20 carbon atoms, an aryl group having 6 to 20 carbon atoms, an aralkyl group having 7 to 20 carbon atoms, or a triorganosiloxy group represented by (R'O)₃Si-, and when two R¹s are present, they may be the same or different. R' represents a monovalent hydrocarbon group having 1 to 20 carbon atoms and the three R's may be the same or different. Y represents a hydroxyl group or a hydrolyzable group, and when two or more Ys are present, they may be the same or different. And a represents 1, 2, or 3.

Examples of such a hydrolyzable group include generally used ones such as a hydrogen atom, an alkoxy group, an acyloxy group, an ketoximato group, an amino group, an amido group, an aminoxy group, an mercapto group, and an alkenyloxy group. Among these, an alkoxy, amido and aminoxy groups are preferable. In view of mild hydrolyzability and ease of handling, an alkoxy group is particularly preferable.

In view of curability, a is preferably 2 or more, although it is not particularly limited. Crosslinkable silyl groups in which a is 3 (e.g. trimethoxy functional groups) are more rapid in curability than those in which a is 2 (e.g. dimethoxy functional groups). However, in some cases, crosslinkable silyl groups in which a is 2 are more excellent in storage stability or mechanical properties (such as elongation). In order to achieve a balance between curability and physical properties, a group in which a is 2 (e.g. dimethoxy functional groups) and a group in which a is 3 (e.g. trimethoxy functional groups) may be used in combination.

### <Methods for introducing silyl group>

Methods for introducing a silyl group into the vinyl polymer (B) of the present invention will now be described, but are not limited to the following.

Examples of a method for synthesizing the vinyl polymer (B) having at least one crosslinkable silyl group include:
(A) a method comprising adding a hydrosilane compound having a crosslinkable silyl group to a vinyl polymer having at least one alkenyl group in the presence of a hydrosilylation catalyst;
(B) a method comprising a reaction of a vinyl polymer having at least one hydroxyl group with a compound having, in each molecule, both a crosslinkable silyl group and a group capable of reacting with the hydroxyl group, such as an isocyanato group;
(C) a method comprising subjecting a compound having, in each molecule, both a polymerizable alkenyl group and a crosslinkable silyl group to reaction in synthesizing the vinyl polymer by radical polymerization;
(D) a method comprising using a chain transfer agent having a crosslinkable silyl group upon synthesizing the vinyl polymer by radical polymerization; and
(E) a method comprising the reaction of a vinyl polymer having at least one highly reactive carbon-halogen bond with a compound having, in each molecule, both a crosslinkable silyl group and a stabilized carbanion.

The vinyl polymer having at least one alkenyl group, which is used in the above method (A), can be obtained by various methods. Several methods of synthesis will now be described, but are not limited to the following.
(A-a) A method comprising subjecting a compound having, in each molecule, both a polymerizable alkenyl group and a low polymerizable alkenyl group as the second monomer upon synthesizing the vinyl polymer by radical polymerization. For example, such a compound is represented by the general formula (6):

   H₂C=C(R⁴)-R¹¹-R⁸-C(R¹²)-CH₂ ··· (6)

   (wherein R⁴ represents a hydrogen atom or a methyl group, R¹¹ represents -C (O) O- or an o-, m-, or p-phenylene group, R⁸ represents a direct bond or a divalent organic group having 1 to 20 carbon atoms, which may include at least one ether bond, and R¹² represents a hydrogen atom, an alkyl group having 1 to 20 carbon atoms, an aryl group having 6 to 20 carbon atoms, or an aralkyl group having 7 to 20 carbon atoms).
   The stage, in which the reaction of the compound having, in each molecule, both a polymerizable alkenyl group and a low polymerizable alkenyl group should be conducted, is not particularly limited. In particular, if rubber-like properties are expected for products prepared by living radical polymerization, the compound is preferably subjected to reaction as the second monomer at the final stage of the polymerization reaction or after completion of the reaction of the predetermined monomer.
(A-b) A method comprising the reaction of a compound having at least two low polymerizable alkenyl groups, such as 1,5-hexadiene, 1,7-octadiene, or 1,9-decadiene at the final stage of the polymerization or after completion of the reaction of the predetermined monomer upon synthesizing the vinyl polymer by living radical polymerization.
(A-c) A method comprising the reaction of an organometallic compound having an alkenyl group, e.g. an organotin such as allyltributyltin or allyltrioctyltin, with a vinyl polymer having at least one highly reactive carbon-halogen bond, to substitute the halogen.
(A-d) A method comprising the reaction of a stabilized carbanion having an alkenyl group with a vinyl polymer having at least one highly reactive carbon-halogen bond, to substitute the halogen. Such a carbanion is represented by general formula (7):

   M+C⁻(R¹³)(R¹⁴)-R¹⁵-C(R¹²)=CH₂ ··· (7)

   (wherein R¹² is the same as the above; both R¹³ and R¹⁴ represent electron-withdrawing groups capable of stabilizing the carbanion C⁻, or one of R¹³ and R¹⁴ represents such an electron-withdrawing group and the other represents a hydrogen atom, an alkyl group having 1 to 10 carbon atoms, or a phenyl group; R¹⁵ represents a direct bond or a divalent organic group having 1 to 10 carbon atoms, which may include at least one ether bond; and M⁺ represents an alkali metal ion or a quaternary ammonium ion).
   Particularly preferable examples of such an electron-withdrawing group R¹³ and/or R¹⁴ include moieties having a structure of -CO₂R, -C(O)R, or -CN.
(A-e) A method comprising the reaction of a metal element such as zinc, or an organometallic compound with a vinyl polymer having at least one highly reactive carbon-halogen bond, to produce an enolate anion, followed by the reaction of the enolate anion with an electrophilic compound having an alkenyl group, for example, an alkenyl-containing compound having a leaving group such as a halogen atom or an acetyl group, an alkenyl-containing carbonyl compound, an alkenyl-containing isocyanate compound, or an alkenyl-containing acid halide.
(A-f) A method comprising the reaction of an oxyanion having an alkenyl group or a carboxylate anion having an alkenyl group with a vinyl polymer having at least one highly reactive carbon-halogen bond, to substitute the halogen. For example, such an oxyanion is represented by the general formula (8):

   H₂C=C(R¹²)-R¹⁶-O⁻M⁺ ··· (8)

   (wherein R¹² and M⁺ are the same as the above and R¹⁶ represents a divalent organic group having 1 to 20 carbon atoms, which may include at least one ether bond). And such a carboxylate anion is represented by the general formula (9):

   H₂C=C(R¹²)-R⁸-C(O)O⁻M⁺ ··· (9)

   (wherein R¹² and M⁺ are the same as the above and R⁸ represents a direct bond or a divalent organic group having 1 to 20 carbon atoms, which may include at least one ether bond).

Examples of methods for synthesizing the above vinyl polymer having at least one highly reactive carbon-halogen bond include, but are not limited to, atom transfer radical polymerization method using an organic halide or the like as an initiator and a transition metal complex as a catalyst, as described above.

Also, the vinyl polymer having at least one alkenyl group can be produced from a vinyl polymer having at least one hydroxyl group. Examples of usable methods will be described below, but are not limited to the following:
(A-g) A method comprising treating such a hydroxyl group of a vinyl polymer having at least one hydroxyl group with a base, such as sodium methoxide, followed by the reaction of the pre-product with a halide having an alkenyl group, such as allyl chloride;
(A-h) A method comprising the reaction of such a hydroxyl group with an isocyanate compound having an alkenyl group, such as allyl isocyanate;
(A-i) A method comprising the reaction of such a hydroxyl group with an acid halide having an alkenyl group, such as (meth)acrylic acid chloride, in the presence of a base such as pyridine; and
(A-j) A method comprising the reaction of such a hydroxyl group with a carboxylic acid having an alkenyl group, such as acrylic acid, in the presence of an acid catalyst.

In the present invention, the living radical polymerization method is preferable for synthesizing the vinyl polymer if there is no halogen directly involving in the method for introducing an alkenyl group, as in methods (A-a) and (A-b). The method (A-b) is more preferable in view of easier controllability.

If an alkenyl group is introduced by converting a halogen atom of a vinyl polymer having at least one highly reactive carbon-halogen bond, a preferable polymer to be used is a vinyl polymer having at least one highly reactive carbon-halogen bond at the terminus, the vinyl polymer being obtainable by subjecting a vinyl monomer to radical polymerization (atom transfer radical polymerization method) using, as an initiator, an organic halide or a halogenated sulfonyl compound having at least one highly reactive carbon-halogen bond and, as a catalyst, a transition metal complex. The method (A-f) is more preferable in view of easier controllability.

The hydrosilane compound having a crosslinkable silyl group is not particularly limited, but examples thereof include, as typical examples, compounds represented by general formula (10):

H-Si(R¹)₃₋ₐ(Y)ₐ ··· (10)

(wherein R¹ represents an alkyl group having 1 to 20 carbon atoms, an aryl group having 6 to 20 carbon atoms, or an aralkyl group having 7 to 20 carbon atoms; Y represents a hydroxyl group or a hydrolyzable group, and when two or more Ys are present, they may be the same or different; and a represents 1, 2, or 3).

Generally, a transition metal catalyst is used upon adding the hydrosilane compound having a crosslinkable silyl group to the alkenyl group. Examples of such a transition metal catalyst include elemental platinum; solid platinum dispersed on a carrier such as alumina, silica, or carbon black; chloroplatinic acid; complexes of chloroplatinic acid with alcohols, aldehydes, ketones, or the like; platinum-olefin complexes; and platinum (0)-divinyltetramethyldisiloxane complex. Examples of catalysts other than platinum compounds include RhCl(PPh₃)₃, RhCl₃, RuCl₃, IrCl₃, FeCl₃, AlCl₃, PdCl₂·H₂O, NiCl₂, and TiCl₄.

Examples of such a method for producing the vinyl polymer having at least one hydroxyl group, the vinyl polymer being used in methods (B) and (A-g) to (A-j), includes, but are not limited to, the following methods:
(B-a) A method comprising subjecting a compound having, in each molecule, both a polymerizable alkenyl group and a hydroxyl group to reaction as the second monomer in synthesizing the vinyl polymer by radical polymerization. For example, such a compound is represented by general formula (11):

   H₂C=C(R⁴)-R¹¹-R⁸-OH ··· (11)

   (wherein R⁴, R¹¹, and R⁸ are the same as the above).
   The stage, in which the reaction of the compound having, in each molecule, both a polymerizable alkenyl group and a hydroxyl group should be conducted, is not particularly limited. In particular, if rubber-like properties are expected for products prepared by living radical polymerization, the compound is preferably subjected to reaction as the second monomer at the final stage of the polymerization reaction or after completion of the reaction of the predetermined monomer;
(B-b) A method comprising subjecting an alkenyl alcohol, such as 10-undecenol, 5-hexenol, or allyl alcohol, to reaction at the final stage of polymerization reaction or after completion of the reaction of the predetermined monomer in synthesizing the vinyl polymer by living radical polymerization;
(B-c) A method comprising subjecting a vinyl monomer to radical polymerization using a large amount of hydroxyl-group-containing chain transfer agent such as a hydroxyl-group-containing polysulfide, as described in, for example, Japanese Unexamined Patent Application Publication No. 5-262808;
(B-d) A method comprising subjecting a vinyl monomer to radical polymerization using hydrogen peroxide or a hydroxyl-group-containing initiator, as described in, for example, Japanese Unexamined Patent Application Publication Nos. 6-239912 and 8-283310;
(B-e) A method comprising subjecting a vinyl monomer to radical polymerization using an alcohol excessively, as described in, for example, Japanese Unexamined Patent Application Publication No. 6-116312;
(B-f) A method comprising introducing a terminal hydroxyl group by hydrolyzing a halogen atom of a vinyl polymer having at least one highly reactive carbon-halogen bond or allowing such a halogen atom to react with a compound having a hydroxyl group by a method described in, for example, Japanese Unexamined Patent Application Publication No. 4-132706;
(B-g) A method comprising the reaction of a vinyl polymer having at least one highly reactive carbon-halogen bond with a stabilized carbanion having a hydroxyl group to substitute the halogen. Such a carbanion is represented by general formula (12):

   M⁺C⁻(R¹³)(R¹⁴)-R¹⁵-OH ··· (12)

   (wherein R¹³, R¹⁴, and R¹⁵ are the same as the above).
   Particularly preferable examples of the electron-withdrawing group R¹³ and/or R¹⁴ include moieties having a structure of -CO₂R, -C(O)R, or -CN;
(B-h) A method comprising the reaction of a vinyl polymer having at least one highly reactive carbon-halogen bond with a metal element such as zinc, or an organometallic compound, to prepare an enolate anion, followed by the reaction of the enolate anion with an aldehyde or a ketone;
(B-i) A method comprising the reaction of a vinyl polymer having at least one highly reactive carbon-halogen bond with an oxy anion having a hydroxyl group or carboxylate anion having a hydroxyl group, to substitute the halogen. For example, such an oxyanion is represented by the general formula (13):

   HO-R¹⁶-O⁻M⁺ ··· (13)

   (wherein R¹⁶ and M⁺ are the same as the above). Such a carboxylate anion is represented by general formula (14) :

   HO-R⁸-C(O)O⁻M⁺ ··· (14)

   (wherein R⁸ and M⁺ are the same as the above); and
(B-j) A method comprising subjecting a compound having, in each molecule, both a low polymerizable alkenyl group and a hydroxyl group to reaction as the second monomer at the final stage of the polymerization reaction or after completion of the reaction of the predetermined monomer, in synthesizing the vinyl polymer by living radical polymerization.

Examples of such a compound are not particularly limited but include compounds represented by the general formula (15):

H₂C=C(R⁴)-R¹⁶-OH ··· (15)

(wherein R⁴ and R¹⁶ are the same as the above).

The compound represented by general formula (15) is not particularly limited but, in view of the ease of availability, an alkenyl alcohol such as 10-undecenol, 5-hexenol, or allyl alcohol is preferable.

In the present invention, if there is no halogen directly involving in the method for introducing a hydroxyl group, as in the methods (B-a) to (B-e) and (B-j), living radical polymerization method is preferable for synthesizing the vinyl polymer. The method (B-b) is more preferable in view of easier controllability.

If an hydroxyl group is introduced by converting a halogen atom of a vinyl polymer having at least one highly reactive carbon-halogen bond, a preferable polymer to be used is a vinyl polymer having at least one highly reactive carbon-halogen bond at the terminus, the vinyl polymer being obtainable by subjecting a vinyl monomer to radical polymerization (atom transfer radical polymerization method) using, as an initiator, an organic halide or a halogenated sulfonyl compound and, as a catalyst, a transition metal complex. The method (B-i) is more preferable in view of easier controllability.

Examples of such a compound having, in each molecule, both a crosslinkable silyl group and a group capable of reacting with a hydroxyl group, such as an isocyanato group, include γ-isocyanatopropyltrimethoxysilane, γ-isocyanatopropylmethyldimethoxysilane, and γ-isocyanatopropyltriethoxysilane. Any generally known urethane forming reaction catalyst may be used according to need.

Examples of such a compound having, in each molecule, both a polymerizable alkenyl group and a crosslinkable silyl group, which is used in method (C), include γ-trimethoxysilylpropyl (meth)acrylate, and γ-methyldimethoxysilylpropyl (meth)acrylate, as compounds represented by the general formula (16):

H₂C=C(R⁴)-R¹¹-R¹⁷-Si(R¹)₃₋ₐ(Y)ₐ ··· (16)

(wherein R¹, R⁴, R¹¹, Y, and a are the same as the above and R¹⁷ represents a direct bond or a divalent organic group having 1 to 20 carbon atoms, which may include at least one ether bond).

The stage, in which the reaction of the compound having, in each molecule, both a polymerizable alkenyl group and a crosslinkable silyl group should be conducted, is not particularly limited. In particular, if rubber-like properties are expected for products prepared by living radical polymerization, the compound is preferably subjected to reaction as the second monomer at the final stage of the polymerization reaction or after completion of the reaction of the predetermined monomer.

Examples of such a chain transfer agent having a crosslinkable silyl group, which is used in chain transfer agent method (D), include mercaptans having a crosslinkable silyl group and hydrosilanes having a crosslinkable silyl group, as described in, for example, Japanese Examined Patent Application Publication Nos. 3-14068 and 4-55444.

Examples of such a method of synthesizing the vinyl polymer having at least one highly reactive carbon-halogen bond, which is used in method (E), include, but are not limited to, the atom transfer radical polymerization method using an organic halide or the like as an initiator and a transition metal complex as a catalyst. Examples of such a compound having, in each molecule, both a crosslinkable silyl group and a stabilized carbanion include compounds represented by the general formula (17):

M⁺C⁻(R¹³)(R¹⁴)-R⁸-C(H)(R¹⁸)-CH₂-Si(R¹-)₃₋ₐ(Y)ₐ ··· (17)

(wherein R¹, R¹³, R¹⁴, Y, and a are the same as the above, R⁸ represents a direct bond or a divalent organic group having 1 to 10 carbon atoms, which may include at least one ether bond, and R¹⁸ represents a hydrogen atom, an alkyl group having 1 to 10 carbon atoms, an aryl group having 6 to 10 carbon atoms, or an aralkyl group having 7 to 10 carbon atoms).

Particularly preferable examples of the electron-withdrawing group R¹³ and/or R¹⁴ include moieties having a structure of -CO₂R, -C(O)R, or -CN.

The plasticizer (C) used in the present invention is not particularly limited and any known plasticizer may be used. Specific examples of such a plasticizer include phthalates such as dibutyl phthalate, diheptyl phthalate, di(2-ethylhexyl) phthalate, butyl benzyl phthalate, di-n-octyl phthalate, diisononyl phthalate, diisodecyl phthalate, and diundecyl phthalate; nonaromatic dibasic acid esters such as di(2-ethylhexyl) adipate, di-n-dioctyl adipate, diisononyl adipate, diisodecyl adipate, di(2-ethylhexyl) sebacate, and di-2-ethylhexyl
tetrahydrophthalate; process oil such as paraffin base oil, naphthene base oil, and aroma base oil; fatty acid oil such as linseed oil, soybean oil, and tung oil; aromatic esters such as tri-2-ethylhexyl trimellitate and triisodecyl trimellitate; fatty acid esters such as butyl oleate, methyl acetylricinoleate, and pentaerythritol ester; oligomers of polyvinyl such as polybutene, hydrogenated polybutene, or hydrogenated α-olefin oligomer; oligomers of hydrogenated polybutadiene such as hydrogenated liquid polybutadiene; paraffin such as paraffin oil or chlorinated paraffin oil; cycloparaffin such as naphthene oil; aromatic oligomers such as biphenyl and triphenyl; completely or partially hydrogenated products of aromatic oligomers; sulfonate compounds such as phenyl alkylsulphonate ; sulfonamide compounds such as toluenesulfonamide, N-ethyltoluenesulfonamide, and N-cyclohexyltoluenesulfonamide. These may be used alone or in combinations of two or more plasticizers.

The addition of plasticizer (C) decreases viscosity of the composition, and improves workability. Aromatic oligomers, completely or partially hydrogenated products of aromatic oligomers, sulfonate compounds, sulfonamide compounds, and the like are preferable because these compounds tend to significantly improve dispersion stability of the component (A) and the component (B) in the present invention.

If the curable composition contains the component (C), the content of the component (C) is preferably 5 to 300 parts by weight, more preferably 10 to 150 parts by weight, and most preferably 30 to 120 parts by weight relative to 100 parts by weight of the component (A). If the content is less than 5 parts by weight, the effect of decreasing viscosity of the composition and the effects of improving compatibility and dispersibility of the component (A) and the component (B) may be insufficient. If the content exceeds 300 parts by weight, satisfactory mechanical properties may not be achieved.

The curable composition of the present invention may include an epoxy resin (D) according to need. The addition of epoxy resin increases strength of the cured object, and thus the improvement in rutting resistance in the summer season is expected. Examples of such an epoxy resin (D) include epichlorohydrin-bisphenol A epoxy resin, epichlorohydrin-bisphenol F epoxy resin, fire retardant epoxy resins such as glycidyl ethers of tetrabromobisphenol A; novolac epoxy resins; hydrogenated bisphenol A epoxy resins; epoxy resin of glycidyl ether of bisphenol A propylene oxide adduct; epoxy resin of glycidyl ether ester of p-hydroxybenzoic acid; m-aminophenol epoxy resin; diaminodiphenylmethane epoxy resin; urethane-modified epoxy resins; various alicyclic epoxy resins; N,N-diglycidylaniline; N,N-diglycidyl-o-toluidine; triglycidylisocyanurate; polyalkyleneglycol diglycidyl ether; glycidyl ethers of a polyhydric alcohol such as glycerin; hydantoin epoxy resins; and epoxy compounds of an unsaturated polymer such as petroleum resin. The epoxy resin (D) is not limited to these and any general epoxy resin may be used. Epoxy resins having at least two epoxy groups in each molecule are preferable from the viewpoint that reactivity in curing is high, and three-dimensional networks are easily formed in the cured product. Bisphenol A epoxy resins and novolac epoxy resins are more preferable.

If the component (D) is added, the content of component (D) is preferably 5 to 120 parts by weight, more preferably 5 to 100 parts by weight, and most preferably 20 to 100 parts by weight relative to 100 parts by weight of the component (A). If the content exceeds 120 parts by weight, storage stability of the curable composition tends to be insufficient. If the content is less than 5 parts by weight, the improvement of strength, which is the purpose of the addition, may not be achieved.

If the epoxy resin (D) is added to the composition of the present invention, a curing agent for curing the epoxy resin may be used in combination. The usable curing agent for an epoxy resin is not particularly limited and any known curing agents for epoxy resins may be used. Examples of such a curing agent include, but are not limited to, primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, and amino-terminated polyethers; tertiary amines such as 2,4,6-tris(dimethylaminomethyl)phenol and tripropylamine; salts of these tertiary amines; polyamide resins; imidazoles; dicyandiamides; boron trifluoride complex compounds; carboxylic acid anhydrides such as phthalic anhydride, hexahydrophthalic anhydride, tetrahydrophthalic anhydride, dodecynyl succinic anhydride, pyromellitic anhydride, and chlorendic anhydride; alcohols; phenols; carboxylic acids; and diketone complex compounds of aluminum or zirconium. The curing agent may be used alone or in combinations of two or more compounds.

If a curing agent for an epoxy resin is used, the amount used is preferably 0.1 to 300 parts by weight relative to 100 parts by weight of the epoxy resin.

Ketimine compounds may be used as a curing agent for an epoxy resin. Ketimine compounds are stable in a moisture free condition, but are decomposed by moisture into a primary amine and a ketone. The resultant primary amine functions as a curing agent that cures an epoxy resin at a room temperature. Use of a ketimine compound provides a one-component composition. Such a ketimine compound can be produced by condensation reaction between an amine compound and a carbonyl compound.

A known amine compound and a known carbonyl compound may be used for the synthesis of a ketimine compound. Examples of such an amine compound include diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, and p,p'-biphenylenediamine; polyvalent amines such as 1,2,3-triaminopropane, triaminobenzene, tris(2-aminoethyl)amine, and tetra(aminomethyl)methane; polyalkylenepolyamines such as diethylenetriamine, triethylenetriamine, and tetraethylenepentamine; polyoxyalkylene-based polyamines; and aminosilanes such as γ-aminopropyltriethoxysilane, N-(β-aminoethyl)-γ-aminopropyltrimethoxysilane, and N-(β-aminoethyl)-γ-aminopropylmethyldimethoxysilane. Examples of such an carbonyl compound include aldehydes such as acetaldehyde, propionaldehyde, n-butylaldehyde, isobutylaldehyde, diethylacetaldehyde, glyoxal, and benzaldehyde; cyclic ketones such as cyclopentanone, trimethylcyclopentanone, cyclohexanone, and trimethylcyclohexanone; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone, and diisobutyl ketone; and β-dicarbonyl compounds such as acetylacetone, methyl acetoacetate, ethyl acetoacetate, dimethyl malonate, diethyl malonate, methyl ethyl malonate, and dibenzoylmethane.

If a ketimine compound has an imino group, the imino group may be allowed to react with styrene oxide; glycidyl ethers such as butyl glycidyl ether and allyl glycidyl ether; and glycidyl esters. These ketimine compounds may be used alone or in combinations of two or more compounds. The amount of such a ketimine compound is 1 to 100 parts by weight relative to 100 parts by weight of the epoxy resin (D). The amount used is varied depending on the type of the epoxy resin and the type of the ketimine compound.

The curable composition of the present invention may include an alkyl (meth)acrylate polymer (E). The term "alkyl (meth)acrylate polymer" represents a polymer composed of a main monomer component of an alkyl methacrylate and/or an alkyl acrylate represented by the general formula (18):

CH₂=C(R¹⁹)COOR²⁰ ··· (18)

(wherein R¹⁹ represents a hydrogen atom or a methyl group and R²⁰ represents an alkyl group having 1 to 30 carbon atoms), and the polymer may be a polymer composed of a single monomer component or a copolymer composed of a plurality of monomer components. Addition of this alkyl (meth)acrylate polymer (E) to the curable composition of the present invention will improve adhesiveness of the composition and weather resistance.

Examples of R²⁰ in the general formula (18) include methyl, ethyl, propyl, n-butyl, tert-butyl, 2-ethylhexyl, nonyl, lauryl, tridecyl, cetyl, stearyl, and behenyl groups. A single monomer or two or more monomers may be used as the monomer represented by the general formula (18).

If two or more monomers are used, a monomer (a) having 1 to 8 carbon atoms in R²⁰ and a monomer (b) having at least 10 carbon atoms in R²⁰ in the general formula (18) are preferably used in combination. In such a case, compatibility of the curable composition will be easily controlled by changing the ratio of the monomers used.

Specific examples of an alkyl (meth)acrylate monomer include methyl (meth)acrylate, ethyl (meth)acrylate, n-propyl (meth)acrylate, n-butyl (meth)acrylate, isobutyl (meth)acrylate, tert-butyl (meth)acrylate, n-hexyl (meth)acrylate, heptyl (meth)acrylate, 2-ethylhexyl (meth)acrylate, nonyl (meth)acrylate, decyl (meth)acrylate, undecyl (meth)acrylate, lauryl (meth)acrylate, tridecyl (meth)acrylate, myristyl (meth)acrylate, cetyl (meth)acrylate, stearyl (meth)acrylate, and behenyl (meth)acrylate.

The molecular chain of such a component (E) is substantially composed of one (meth)acrylate monomer unit or at least two alkyl (meth) acrylate monomer units. Herein, the phrase "substantially composed of the above monomer unit(s)" means that the ratio of the alkyl (meth)acrylate monomer unit in the component (E) exceeds 50 weight percent and preferably 70 weight percent or more. The component (E) may further include a monomer unit copolymerizable with an alkyl (meth)acrylate monomer unit, in addition to the alkyl (meth)acrylate monomer unit. For example, monomers having a carboxylic acid group, such as (meth)acrylic acid; those having an amido group, such as (meth)acrylamide and N-methylol(meth)acrylamide; those having an epoxy group, such as glycidyl (meth)acrylate; and those having an amino group, such as diethylaminoethyl (meth)acrylate and aminoethyl vinyl ether, will provide effects due to copolymerization in view of moisture curing property and inner curing property. Other examples of such a monomer unit include monomer units derived from acrylonitrile, styrene, α-methylstyrene, alkylvinyl ether, vinyl chloride, vinyl acetate, vinyl propionate, and ethylene.

Furthermore, the polymer in the component (E) may include a reactive silicon group represented by the general formula (1):

-Si(R¹₃₋ₐ)Yₐ ··· (1)

(wherein R¹ represents an alkyl group having 1 to 20 carbon atoms, an aryl group having 6 to 20 carbon atoms, an aralkyl group having 7 to 20 carbon atoms, or a triorganosiloxy group represented by (R'O)₃Si-(wherein R' represents a monovalent hydrocarbon group having 1 to 20 carbon atoms and the three R's may be the same or different), and when two R¹s are present, they may be the same or different; Y represents a hydroxyl group or a hydrolyzable group, and when two or more Ys are present, they may be the same or different; and a represents 1, 2, or 3).

Note that, if the main chain of the component (E) having the reactive silicon group represented by the general formula (1) is produced by a living radical polymerization method, the component itself corresponds to the component (B). Therefore, the main chain of the component (E) having the reactive silicon group represented by the general formula (1) mentioned here is limited to a main chain produced by a method other than the living radical polymerization method.

Examples of a method for introducing a reactive silicon group into the polymer in the component (E) include a method comprising copolymerizing a compound having both a polymerizable unsaturated bond and the reactive silicon group with an alkyl (meth)acrylate monomer unit. Examples of such a compound having both a polymerizable unsaturated bond and a reactive silicon group include monomers represented by the general formula (19) and/or the general formula (20):

CH₂=C(R¹⁹)COOR²¹-Si(R¹₃₋ₐ)-Yₐ ··· (19)

(wherein R¹⁹ is the same as the above, R²¹ represents a divalent alkylene group having 1 to 6 carbon atoms, and R¹, Y, and a are the same as the above).

CH₂=C(R¹⁹)-SiR¹₃₋ₐ)Yₐ ··· (20)

(wherein R¹⁹, R¹, Y, and a are the same as the above).

Any known monomers may be used as the monomers represented by the general formula (19) and/or the general formula (20). Examples of such a monomer include γ-methacryloxypropylpolyalkoxysilanes such as γ-methacryloxypropyltrimethoxysilane, γ-methacryloxypropylmethyldimethoxysilane, and γ-methacryloxypropyltriethoxysilane; γ-acryloxypropylpolyalkoxysilanes such as γ-acryloxypropyltrimethoxysilane, γ-acryloxypropylmethyldimethoxysilane, and γ-acryloxypropyltriethoxysilane; and vinylalkylpolyalkoxysilanes such as vinyltrimethoxysilane, vinylmethyldimethoxysilane, and vinyltriethoxysilane.

The component (E) can be produced by a normal method of vinyl polymerization. Examples of such a vinyl polymerization include a solution polymerization method through a radical reaction. The polymerization is generally performed by the reaction of the above monomer, a radical initiator, and a chain transfer agent, and other components at 50°C to 150°C. This process generally provides a polymer having a molecular weight distribution of more than 1.8.

Examples of such a radical initiator include azo initiators such as 2,2'-azobisisobutyronitrile, 2,2'-azobis(2-methylbutyronitrile), 4,4'-azobis(4-cyanovaleric) acid, 1,1'-azobis(1-cyclohexanecarbonitrile), azobis(isobutyric acid amidine) hydrochloride, and 2,2'-azobis(2,4-dimethylvaleronitrile); and organic peroxide initiators such as benzoyl peroxide and ditert-butyl peroxide. Among them, azo initiators are preferably used because, for example, the initiator is not affected by the solvent used in the polymerization and hazard for explosion or the like is low.

Examples of such a chain transfer agent include mercaptans such as n-dodecyl mercaptan, tert-dodecyl mercaptan, lauryl mercaptan, γ-mercaptopropyltrimethoxysilane, γ-mercaptopropylmethyldimethoxysilane, γ-mercaptopropyltriethoxysilane, and γ-mercaptopropylmethyldiethoxysilane; and halogen-containing compounds.

The polymerization may be performed in a solvent. Preferred examples of such a solvent include nonreactive solvents such as nonreactive ethers, hydrocarbons, and esters.

In view of the ease of handling, the component (E) preferably has a number average molecular weight of 500 to 100,000 as measured by GPC and determined on the polystyrene equivalent basis. More preferably, the component (E) has a number average molecular weight of 1,500 to 30,000 because weather resistance and workability of cured products are satisfactory.

If the curable composition contains the component (E), the ratio between the component (B) and component (E), i.e., the ratio represented by (B)/(E) is preferably 95/5 to 10/90 by weight and more preferably 80/20 to 60/40 by weight.

With respect to the ratio of the components (B) + (E) to the component (A), the content of the components (B) + (E) is preferably 10 to 500 parts by weight, more preferably 10 to 300 parts by weight, and particularly preferably 30 to 200 parts by weight relative to 100 parts by weight of the component (A).

The tackifier resin (F) used in the present invention is not particularly limited and any known tackifiers may be used. Specific examples of the tackifier resin (F) include petroleum resins such as aliphatic petroleum resins (C-5 resins), aromatic petroleum resins (C-9 resins), mixed aliphatic and aromatic petroleum resins (C-5/C-9 resins), phenol-modified C-5/C-9 resins, and dicyclopentadiene petroleum resins; rosin ester resins, i.e., ester compounds of rosin acid, disproportionated rosin acid, hydrogenated rosin acid, or polymerized rosin acid with glycerin or pentaerythritol; terpene-based resins such as terpene resins, hydrogenated terpene resins; aromatic modified terpene resins, aromatic modified hydrogenated terpene resins, phenol-modified terpene resins (terpene phenol resins), and alkyl phenol-modified terpene resins; styrene resins; xylene-based resins such as xylene resins, phenol-modified xylene resins, and alkyl phenol-modified xylene resins; phenolic resins such as novolac-type phenolic resins, resol-type phenolic resins, alkyl phenolic resins, rosin-modified phenolic resins, cashew oil-modified phenolic resins, and tall oil-modified phenolic resins; and modified resins produced by modifying these resins with an epoxy resin or an acrylic monomer. These may be used alone or in combinations of two or more tackifiers. In particular, various resins modified with phenol or an alkyl phenol are preferably used from the viewpoint that compatibility and dispersion stability of the component (A) and component (B) are improved.

If the component (F) is used, the amount used is preferably 3 to 50 parts by weight, more preferably 5 to 30 parts by weight, and particularly preferably 5 to 20 parts by weight relative to 100 parts by weight of the component (B).

According to need, various additives such as a silanol condensation catalyst, a filler, a thixotropic agent, and an age resister may be further added to the curable composition of the present invention.

The silanol condensation catalyst is not particularly limited and any known silanol condensation catalyst may be used. Specific examples of such a silanol condensation catalyst include titanates such as tetrabutyl titanate and tetrapropyl titanate; organotin compounds such as dibutyltin dilaurate, dibutyltin maleate, dibutyltin diacetate, tin octoate, tin naphthenate, reaction products of dibutyltin oxide and a phthalate, and dibutyltin bis(acetylacetonate); organoaluminum compounds such as aluminum tris(acetylacetonate), aluminum tris(ethylacetoacetate), and diisopropoxy aluminum ethylacetoacetate; chelate compounds such as zirconium tetraacetylacetonate and titanium tetraacetylacetonate; lead octoate; amine compounds such as butylamine, octylamine, dibutylamine, lauryl amine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethyl aminomethyl)phenol, morpholine, N-methylmorpholine, 2-ethyl-4-methylimidazole, and 1,8-diazabicyclo[5,4,0]undecene-7; salts of these amine compounds with carboxylic acids or the like; acidic phosphates; reaction products of an acidic phosphates and an amine; saturated or unsaturated polyvalent carboxylic acid and acid anhydrides thereof; low molecular weight polyamide resins produced from an excess polyamine and a polybasic acid; reaction products of an excess polyamine and an epoxy compound; and silane coupling agents having an amino group, for example, γ-aminopropyltrimethoxysilane and N-(β-aminoethyl)-γ-aminopropylmethyldimethoxysilane. Examples of such a catalyst further include other known silanol condensation catalyst such as acidic catalysts and basic catalysts. These catalysts may be used alone or in combinations of two or more catalysts.

The amount used of silanol condensation catalyst is preferably 0.01 to 15 parts by weight and more preferably 0.1 to 10 parts by weight relative to 100 parts by weight of the component (B). If the amount is less than 0.01 parts by weight, curability of a composition decreases. If the amount exceeds 15 parts by weight, storage stability, adhesiveness, etc. are deteriorated. In particular, tetravalent tin catalysts are preferable in view of the curing rate and storage stability of the curable composition. The filler is not particularly limited and any known filler may be used. Examples of such an filler include inorganic fillers such as calcium carbonate, magnesium carbonate, titanium oxide, fly ash, silica sand, crushed stones, gravel, carbon black, fused silica, precipitated silica, diatomaceous earth, terra alba, kaolin, clay, talc, wood flour, walnut shell flour, chaff flour, silicic acid anhydride, quartz powder, aluminum powder, zinc powder, asbestos, glass fiber, carbon fiber, glass beads, alumina, glass balloons, fly ash balloons, Shirasu balloon, silica balloons, and silicon oxide; and organic fillers such as, wood fillers, e.g., pulp and cotton chips, rubber powder, fine powder of recycled rubber, fine powder of thermoplastic or thermosetting resins, and hollow particles composed of polyethylene or the like. These fillers may be used alone or in combinations of two or more fillers.

The amount of filler is preferably 50 to 1,000 parts by weight and particularly preferably 60 to 900 parts by weight relative to 100 parts by weight of the component (B). If the amount of the filler is less than 50 parts by weight, the purpose of using a filler may not be achieved. If the amount exceeds 1,000 parts by weight, viscosity increases and thus workability may be impaired. In particular, fly ash balloons and calcium carbonate are more preferable.

The thixotropic agent is not particularly limited and any known thixotropic agent may be used. Examples of such a thixotropic agent include hydrogenated castor oil, organic amide wax, organic bentonite, and calcium stearate. These thixotropic agents may be used alone or in combinations of two or more thixotropic agents.

The amount of thixotropic agent used is preferably 0.1 to 50 parts by weight and particularly preferably 1 to 30 parts by weight relative to 100 parts by weight of the component (B). If the amount used of thixotropic agent is less than 0.1 parts by weight, satisfactory thixotropy may not be attained. Also, an amount exceeding 50 parts by weight is not preferable because of increase in the cost or the like.

The age resister is not particularly limited and any known age resister may be used. Examples of such an age resister include phenolic antioxidants, aromatic amine antioxidants, sulfur-based antioxidants, phosphorus-based antioxidants, benzotriazole ultraviolet absorbers, salicylate ultraviolet absorbers, benzoate ultraviolet absorbers, benzophenone ultraviolet absorbers, hindered amine light stabilizers, and nickel-based light stabilizers.

The amount of age resister used is preferably 0.01 to 20 parts by weight and particularly preferably 0.1 to 10 parts by weight relative to 100 parts by weight of the component (B).

Examples of such phenolic antioxidants include 2,6-di-tert-butylphenol, 2,4-di-tert-butylphenol, 2,6-di-tert-butyl-4-methylphenol, 2,5-di-tert-butylhydroquinone, n-octadecyl-3-(3,5-di-tert-butyl-4-hydroxyphenyl)-propionate, pentaerythrityl-tetrakis[3-(3,5-di-tert-butyl-4-hydroxyphenyl)propionate], 2,2'-methylenebis(4-methyl-6-tert-butylphenol), 4,4'-butylidenebis(3-methyl-6-tert-butylphenol), and 4,4'-thiobis(3-methyl-6-tert-butylphenol).

Examples of such aromatic amine antioxidants include N,N'-diphenyl-p-phenylenediamine and 6-ethoxy-2,2,4-trimethyl-1,2-dihydroquinoline.

Examples of such sulfur-based antioxidants include dilauryl-3,3'-thiodipropionate, ditridecyl-3,3'-thiodipropionate, and distearyl-3,3'-thiodipropionate.

Examples of such phosphorus-based antioxidants include diphenyl isooctyl phosphite and triphenyl phosphite.

Examples of such benzotriazole ultraviolet absorbers include 2-(3,5-di-tert-butyl-2-hydroxyphenyl)-5-chlorobenzotriazole, 2-(3-tert-butyl-5-methyl-2-hydroxyphenyl)-5-chlorobenzotriazole, 2-(3,5-di-tert-butyl-2-hydroxyphenyl)benzotriazole, and 2-(5-methyl-2-hydroxyphenyl)benzotriazole.

Examples of such salicylate ultraviolet absorbers include 4-tert-butylphenyl salicylate.

Examples of such benzoate ultraviolet absorbers include 2,4-di-tert-butylphenyl-3,5-di-tert-butyl-4-hydroxybenzoate.

Examples of such benzophenone ultraviolet absorbers include 2,4-dihydroxybenzophenone, 2-hydroxy-4-methoxybenzophenone, 2-hydroxy-4-n-octoxybenzophenone, 2-hydroxy-4-n-dodecyloxybenzophenone, and 2-hydroxy-4-benzyloxybenzophenone.

Examples of such hindered amine light stabilizers include bis(2,2,6,6-tetramethyl-4-piperidyl)sebacate, bis(1,2,2,6,6-pentamethyl-4-piperidyl)sebacate, 1-{2-[3-(3,5-di-tert-butyl-4-hydroxyphenyl)-propionyloxy]ethyl}-4-[3-(3,5-di-tert-butyl-4-hydroxyphenyl)propionyloxy]-2,2,6,6-tetramethylpiperidine, and 4-benzoyloxy-2,2,6,6-tetramethylpiperidine.

Examples of such nickel-based light stabilizers include nickel dibutyldithiocarbamate, [2,2'-thiobis(4-tert-octylphenolate)]-2-ethylhexylamine nickel (II), and [2,2'-thiobis(4-tert-octylphenolate)]-n-butylamine nickel (II).

These age resisters may be used alone or in combinations of two or more compounds. Some combinations of the age resisters may function more effectively compared with a case where a single compound is used.

The curable composition of the present invention can be used as sealing materials, adhesives, pressure-sensitive adhesives, filling materials, waterproof materials, damping materials, soundproof materials in a wide range applications such as the civil engineering, the architecture, and the industry.

Specific examples of such applications include a joint sealing of interior or exterior walls, floors, various types of concrete, or metals; a sealant for vessels; a joint material for pools; an ant-proof sealant; an adhesive for floor materials, wall materials, or roofing materials; an adhesive for tiles, stone materials, or decorated panels on interior or exterior walls; a sealing adhesive for earthenware pipes, manholes, cables, or the like; a potting material; various pressure-sensitive adhesives; a paving material, a repairing material, and a joint material for ordinary roads, expressways, or airport runways; a waterproof material for undergrounds of buildings; a waterproof material for multistory parking garages; a waterproof material for roofs; a coating material for roofs; and a damping material and a soundproof material for vehicles, vessels, or household electric appliances.

Among these applications, the curable composition of the present invention is particularly suitable for applications to an adhesive for tiles, a waterproof material, a road-paving material, a water-stopping material for civil engineering, and a damping material. The applications to a waterproof material, an adhesive for tiles, a road-paving material, a water-stopping material for civil engineering, and a damping material will now be described.

### <Waterproof material>

A hot-applied asphalt waterproofing roofing process for asphalt waterproofing is mainly employed for a waterproofing work. In this process, blown asphalt is melted at a construction site, and thereby an application of an asphalt roofing is repeated three or four times to form a waterproofing layer. Other processes include a torch-applied process, a normal temperature (tacky adhesion) process, and an adhesion process, and the like. In the torch-applied process, the reverse face of an asphalt roofing sheet is heated with a special torch burner so that asphalt provided on the reverse face is fixed on a base material while being melted. In the normal temperature (tacky adhesion) process, asphalt is fixed on a base material with a pressure-sensitive adhesive provided on the reverse face of an asphalt roofing sheet. In the adhesion process, an asphalt roofing sheet is fixed on a base material with an asphalt-based adhesive. Among these processes, hot-applied asphalt waterproofing roofing process has been mainly employed in view of waterproofing reliability (adhesiveness to base materials).

However, in the hot-applied asphalt waterproofing roofing process, the molten asphalt generates a large amount of fumes and odors upon melting asphalt, resulting in a significant pollution of the surrounding environment. Therefore, this process has been avoided in thickly housed areas and central urban areas, and the applicable area has been limited. Furthermore, they also tend to avoid hot-applied asphalt waterproofing roofing process since workers face dangers of burn injury.

In order to overcome these problems, cutback asphalt prepared by diluting asphalt with a solvent is used as a primer before an asphalt roofing sheet is applied, thereby improving adhesiveness to base materials. However, this technique significantly pollutes the environment because of volatilization of the solvent.

In contrast, a waterproof material including the curable composition of the present invention does not produce a fume or an odor of asphalt or a solvent odor during the working process, and exhibits satisfactory room temperature curability and satisfactory waterproof adhesiveness to mortar. Therefore, curable composition of the present invention is useful as a waterproof material, an adhesive for an asphalt roofing sheet, and a primer.

### <Adhesive for tiles>

An adhesive for tiles is used upon tiling on a wall of architectures or a wall of periphery of a bathroom, a rest room, or a kitchen. Examples of adherends used in such a case include inorganic bases such as cement mortar, a calcium silicate board, a cement board, autoclaved lightweight concrete (ALC) board, and a ceramic-based siding board; wood bases such as laminated wood; and tiles composed of pottery, porcelain, or store ware.

Hitherto, a ball application process using cement mortar kneaded in the form of a ball has been mainly used for adhering tiles. Recently, an adhesion process using an organic adhesive is used in most cases. The adhesive for tiles is roughly classified into aqueous adhesives and reactive adhesives. These adhesives are appropriately used according to the application. The aqueous adhesives are inferior in water resistance, since an aqueous emulsion containing a significant amount of surfactants is used as a base resin. Furthermore, an odor, flammability, and adverse effects on the human body due to an organic solvent used for dissolving a tackifier, etc., are brought into question. On the other hand, urethane resin-based reactive adhesives, epoxy resin-based reactive adhesives, etc., are used as typical adhesives for tiles. In the urethane resin-based adhesives, the rush caused by an isocyanate in the system, and the hazard and adverse effects on the human body due to an organic solvent are brought into question. In the epoxy resin-based adhesives, rush caused by an amine curing agent, and the hazard and adverse effects on the human body due to an organic solvent are brought into question.

In addition, the epoxy resin-based adhesives cannot absorb a distortion when an external force is applied. Therefore, falling off of tiles caused by vibration in earthquakes or the like causes a problem. To solve these problems, Japanese Unexamined Patent Application Publication No. 6-101319 discloses that brittleness of a cured product of an epoxy resin is improved by mixing a rubber organic polymer or a modified silicone compound, and a flexible cured product is thereby produced. However, in places where designed materials, such as tiles or stone materials, are frequently exposed to water, these materials may be fallen off and thus waterproof adhesiveness has not been always satisfactory.

In contrary, an adhesive for tiles including the curable composition of the present invention exhibits excellent waterproof adhesiveness, in particular alkaline waterproof adhesiveness. And the adhesive can be used even as a solvent free composition. Accordingly, the adhesive for tiles including the curable composition of the present invention does not bring a problem about an odor, flammability, or adverse effects on the human body.

### <Road-paving material>

Hitherto, a heating asphalt paving is generally employed when asphalt is used for a road-paving material. However, the heated asphalt generates a large amount of fumes and odors, resulting in a significant pollution of the peripheral environment. Furthermore, in the heating asphalt paving, satisfactory elasticity and adhesiveness cannot be achieved. Consequently, as the temperature increases in summer season, the paved road surface is fluidized, thereby causing a problem of cracking or surface tackiness. Furthermore, in winter season, the surface layer of the asphalt paving is degraded since the caking power of an aggregate in an asphalt paving material is decreased. In addition, the surface layer is cracked or separated due to the temperature difference.

In contrast, the road-paving material including the curable composition of the present invention contributes to pave or repair roads without producing a fume or an odor during paving.

If the curable composition of the present invention is used as a road-paving material, an aggregate is preferably mixed in order to improve reinforcing property.

Examples of such an aggregate include coarse aggregates, fine aggregates and fillers, which has been used in asphalt paving. Crushed stones are used as one of such coarse aggregates but cobble stones, gravel, and slag may also be used. Sand such as river sand, sea sand, or mountain sand is used as the fine aggregate but iron sand and screenings of crushed stones may also be used. In addition, a light-colored aggregate and a hard aggregate may be used. Stone powder formed by pulverizing limestone or igneous rocks is used as one of such fillers. Alternatively, other rock powder, carbonated lime powder, lime, gypsum, fly ash, fly ash balloons, cement, incinerated ash, or the like may also be used. In addition, carbon black, a pigment, or the like may also be used. Furthermore, short fibers such as asbestos, glass fiber, rock wool, a synthetic fiber, and a carbon fiber; and mica powder may be used as a part of the filler.

### <Water-stopping material for civil engineering>

In the fields of civil engineering and construction, vessels, automobiles, and the like, various sealing materials are used to fill or seal jointed portions or cracked portions for the purpose of keeping water-tightness and air-tightness. From the viewpoint of weather resistance, curability, and workability, sealing materials including an organic polymer having a reactive silicon group are widely used as disclosed in, for example, Japanese Unexamined Patent Application Publication No. 8-003537. However, the organic polymer used in the sealing material does not have sufficient water resistance. Accordingly, for example, moisture permeation, or decrease in adhesiveness on the interface will occur during long-time immersing of the sealing material. As a result, satisfactory water-stopping property and adhesiveness are not achieved. Furthermore, weather resistance of the sealing material is also unsatisfactory. Accordingly, for example, when the sealing material is exposed in the open air for a long period of time, cracks are generated on the surface or inside of the sealing material. As a result, satisfactory water-stopping property and adhesiveness are not ensured.

In contrast, the water-stopping material for civil engineering including the curable composition of the present invention is excellent in weather resistance, water resistance, and adhesiveness.

### <Damping material>

Damping materials are used in vehicles, architectures, household electric appliances, and the like.

Damping materials are applied directly or indirectly on a vibration source and a soundproof function is achieved by controlling the vibration. For example, a damping material is used in steel plate parts of automobiles, such as a dash panel separating an engine room and a vehicle cabin, a floor, or a trunk room; architectures such as a floor of condominiums; and household electric appliances generating an undesired noise, such as air conditioners, compressors or vacuum cleaners.

However, when asphalt is laminated on a floor face or the like of an automobile as a damping sheet, the asphalt must be heat-melted. As a result, a problem regarding thermal fluidity occurs. In other words, it is difficult to maintain the thickness of the sheet to be uniform. Consequently, the effect of damping becomes uneven. In addition, the sheet will not be satisfactorily fitted with irregular parts of the substrate and it is difficult to conduct heat-melting bonding so as to closely attach the sheet on the substrate. In order to overcome these technical problems, for example, Japanese Unexamined Patent Application Publication No. 7-323791 discloses a method of mixing a fibrous filler with a sheet base material. However, such a method does not satisfy these physical properties because of the need of heat-melting bonding of asphalt. Also, in order to improve efficiency of working processes and to improve adhesiveness to irregular parts, a cold-setting material has been desired.

In contrast, the damping material including the curable composition of the present invention has a satisfactory workability, does not generate blisters during application, and provides excellent adhesiveness to irregular parts.

### EXAMPLES

Specific examples will now be described to further clarify the present invention, but the present invention is not limited to these examples.

### (Synthesis Example 1)

In a 1-L flask, copper (I) bromide (2.84 g, 19.8 mmol) and acetonitrile (39 mL) were charged and were then stirred under heating in a nitrogen stream at 70°C for 20 minutes. Diethyl 2,5-dibromoadipate (5.93 g, 16.5 mmol), butyl acrylate (280 mL, 1.95 mol), methyl acrylate (49 mL, 0.53 mol), and stearyl acrylate (54 mL, 0.16 mol) were added in the flask and the mixture was further stirred at 80°C for 20 minutes. Pentamethyldiethylenetriamine (hereinafter referred to as triamine) (0.41 mL, 1.98 mmol) was added to the mixture to initiate the reaction. Triamine (0.14 mL, 0.66 mmol) was further added to the mixture. Triamine (0.14 mL, 0.66 mmol) was further added while the mixture was stirred under heating at 80°C. After 180 minutes from the initiation of the reaction, the pressure in the reactor was reduced to remove the volatile matter. After 240 minutes from the initiation of the reaction, acetonitrile (118 mL), 1,7-octadiene (49 mL, 0.33 mol), and triamine (1.38 mL, 6.59 mmol) were added, and the mixture was stirred under heating at 80°C. After 620 minutes from the initiation of the reaction, heating was stopped. The reaction solution was heated under reduced pressure to remove the volatile matter. Subsequently, the pre-product was diluted with toluene and filtered. The filtrate was concentrated to give a polymer. The resultant polymer, Kyowaad 500SH (manufactured by Kyowa Chemical Industry Co., Ltd.: 2 parts by weight relative to 100 parts by weight of the polymer), and Kyowaad 700SL (manufactured by Kyowa Chemical Industry Co., Ltd. : 2 parts by weight relative to 100 parts by weight of the polymer) were mixed in xylene (100 parts by weight relative to 100 parts by weight of the polymer), and the mixture was stirred at 130°C. Three hours later, aluminum silicate was filtered and volatile matter in the filtrate was distilled off by heating under reduced pressure. The polymer was subjected to devolatilization by heating at 180°C for 12 hours (the degree of vacuum: 10 Torr or less), thereby eliminating a Br group from the polymer. The polymer, and Kyowaad 500SH (manufactured by Kyowa Chemical Industry Co., Ltd.: 3 parts by weight relative to 100 parts by weight of the polymer), and Kyowaad 700SL (manufactured by Kyowa Chemical Industry Co., Ltd.: 3 parts by weight relative to 100 parts by weight of the polymer) were mixed in xylene (100 parts by weight relative to 100 parts by weight of the polymer), and the mixture was stirred at 130°C. Five hours later, aluminum silicate was filtered and volatile matter in the filtrate was distilled off by heating under reduced pressure. As a result, an alkenyl-terminated polymer A-1 was prepared.

According to a GPC measurement, the number average molecular weight of the polymer was 29,000 (on the polystyrene equivalent basis) and the molecular weight distribution was 1.3. The alkenyl group introduced into the oligomer molecules was 95% on the average according to a ¹H-NMR analysis.

Subsequently, in a 200-mL pressure-resistant glass reactor, the above polymer (23.3 g), dimethoxymethylhydrosilane (2.55 mL, 20.7 mmol), dimethyl orthoformate (0.38 mL, 3.45 mmol), and a platinum catalyst were charged. The platinum catalyst was used in a molar ratio of 2 x 10-4 equivalents relative to the alkenyl group in the polymer. The reaction mixture was heated at 100°C for 3 hours. The volatile matter was distilled off from the mixture under reduced pressure to produce a silyl-terminated poly(n-butyl acrylate/methyl acrylate/stearyl acrylate) copolymer (Polymer A).

### (Synthesis Example 2)

In a 1-L flask, copper (I) bromide (2.84 g, 19.8 mmol) and acetonitrile (39 mL) were charged and were then stirred under heating in a nitrogen stream at 70°C for 20 minutes. Diethyl 2,5-dibromoadipate (5.93 g, 16.5 mmol), butyl acrylate (254 mL, 1.77 mol), ethyl acrylate (61 mL, 0.66 mol), and stearyl acrylate (71 mL, 0.21 mol) were added in the flask and the mixture was further stirred at 80°C for 20 minutes. Pentamethyldiethylenetriamine (hereinafter referred to as triamine) (0.41 mL, 1.98 mmol) was added to the mixture to initiate the reaction. Triamine (0.14 mL, 0.66 mmol) was further added to the mixture. Triamine (0.14 mL, 0.66 mmol) was further added while the mixture was stirred under heating at 80°C. After 180 minutes from the initiation of the reaction, the pressure in the reactor was reduced to remove the volatile matter. After 240 minutes from the initiation of the reaction, acetonitrile (118 mL), 1,7-octadiene (49 mL, 0.33 mol), and triamine (1.38 mL, 6.59 mmol) were added, and the mixture was stirred under heating at 80°C. After 620 minutes from the initiation of the reaction, the heating was stopped. The reaction solution was heated under reduced pressure to remove the volatile matter. Subsequently, the pre-product was diluted with toluene and filtered. The filtrate was concentrated to produce a polymer. The resultant polymer, and Kyowaad 500SH (manufactured by Kyowa Chemical Industry Co., Ltd.: 2 parts by weight relative to 100 parts by weight of the polymer), and Kyowaad 700SL (manufactured by Kyowa Chemical Industry Co., Ltd.: 2 parts by weight relative to 100 parts by weight of the polymer) were mixed in xylene (100 parts by weight relative to 100 parts by weight of the polymer), and the mixture was stirred at 130°C. Three hours later, aluminum silicate was filtered and volatile matter in the filtrate was distilled off by heating under reduced pressure. The polymer was subjected to devolatilization by heating at 180°C for 12 hours (the degree of vacuum: 10 Torr or less), thereby eliminating a Br group from the polymer. The polymer, Kyowaad 500SH (manufactured by Kyowa Chemical Industry Co., Ltd.: 3 parts by weight relative to 100 parts by weight of the polymer), and Kyowaad 700SL (manufactured by Kyowa Chemical Industry Co., Ltd.: 3 parts by weight relative to 100 parts by weight of the polymer) were mixed in xylene (100 parts by weight relative to 100 parts by weight of the polymer), and the mixture was stirred at 130°C. Five hours later, aluminum silicate was filtered and volatile matter in the filtrate was distilled off by heating under reduced pressure. As a result, an alkenyl-terminated polymer B-1 was prepared.

According to a GPC measurement, the number average molecular weight of the polymer was 27,000 (on the polystyrene equivalent basis) and the molecular weight distribution was 1.3. The alkenyl group introduced into the oligomer molecules was 95% on the average according to a ¹H-NMR analysis.

Subsequently, in a 200-mL pressure-resistant glass reactor, the above polymer (23.3 g), dimethoxymethylhydrosilane (2.55 mL, 20.7 mmol), dimethyl orthoformate (0.38 mL, 3.45 mmol), and a platinum catalyst were charged. The platinum catalyst was used in a molar ratio of 2 x 10-4 equivalents relative to the alkenyl group in the polymer. The reaction mixture was heated at 100°C for 3 hours. The volatile matter was distilled off from the mixture under reduced pressure to produce a silyl-terminated poly(n-butyl acrylate/ethyl acrylate/stearyl acrylate) copolymer (Polymer B).

### (Synthesis Example 3)

Polymerization of propylene oxide was performed using a 1/1 (weight basis) mixture of polyoxypropylene diol having a number average molecular weight of 2,000 and polyoxypropylene triol having a number average molecular weight of 3,000 as an initiator and a zinc hexacyanocobaltate-glyme complex catalyst to prepare polypropylene oxide having a number average molecular weight of 22,000 (determined on the polystyrene equivalent basis by GPC). The resultant polypropylene oxide was allowed to react with sodium methoxide, and the pre-product was then allowed to react with allyl chloride to convert the terminal hydroxyl group to an unsaturated group. Dimethoxymethylsilane was allowed to react with the unsaturated group of the unsaturated group-terminated polyoxyalkylene (the amount of dimethoxymethylsilane was 0.72 mol per mole of the unsaturated group) in the presence of chloroplatinic acid. Thus, a polyoxypropylene-based polymer (Polymer C) having dimethoxymethylsilyl groups at 70% of the molecular termini (by ¹H-NMR analysis) and a number average molecular weight of 22,200 was produced.

### (Synthesis Example 4)

Polymerization of propylene oxide was performed using polyoxypropylene diol having a number average molecular weight of 2,000 as an initiator and a zinc hexacyanocobaltate-glyme complex catalyst to prepare polyoxypropylene glycol having a number average molecular weight of 26,000 (determined on the polystyrene equivalent basis by GPC). The resultant polyoxypropylene glycol was allowed to react with sodium methoxide, and the pre-product was then allowed to react with allyl chloride to convert the terminal hydroxyl group to an unsaturated group. A hydrosilane compound represented by the formula:
HSi(CH₃)(CH₃)OSi(CH₃)(CH₃)CH₂CH₂Si(OCH₃)₃ was allowed to react with the unsaturated group of the unsaturated group-terminated polyoxyalkylene polymer (the amount of dimethoxymethylsilane was 0.77 mol per mole of the unsaturated group) in the presence of chloroplatinic acid. Thus, a polyoxypropylene-based polymer (Polymer D) having trimethoxysilyl groups at 75 of the molecular termini and a number average molecular weight of 26, 300 was obtained.

### (Synthesis Example 5)

Polyoxypropylene glycol (800 g) having a number average molecular weight of 5,200 and isophorone diisocyanate (50.2 g) were charged in a pressure-resistant reactor equipped with a stirrer and mixed. Subsequently, a tin catalyst (a 10% DOP solution of dibutyltin dilaurate) (0.8 g) was added to the mixture. The mixture was stirred at 80°C for 4 hours to prepare an isocyanato-terminated polymer having a number average molecular weight of 15,000 (calculated from a titer (0.579%) of the isocyanato group). The polymer was cooled to 60°C. Subsequently, γ-aminopropyltrimethoxysilane (1.0 equivalent/NCO group) was added to the polymer and the mixture was stirred for about 30 minutes. Thus, a polyoxypropylene-based polymer (Polymer E) having trimethoxysilyl groups at the molecular termini and a number average molecular weight of 17,000 (determined on the polystyrene equivalent basis by GPC) was produced.

Various materials used in the following examples will be described below.

### Component (A)

· Straight asphalt: Straight asphalt 150 to 200 (manufactured by Cosmo Oil Co., Ltd.)
· Blown asphalt: Blown asphalt 20 to 30 (manufactured by Cosmo Oil Co., Ltd.)
· Cutback asphalt: Diluted mixture of blown asphalt 20 to 30 in toluene (solid content: 60%)

### Component (B)

· Polymer A and Polymer B obtained by the above syntheses

### Component (C)

· Mesamoll II: Phenyl alkylsulphonate (manufactured by Bayer)
· HB-40: Partially hydrogenated terphenyl (manufactured by Solutia, Inc.)
· DIDP: Diisodecyl phthalate (manufactured by New Japan Chemical Co., Ltd.)
· Topcizer No. 3: N-Ethyl-o/p-toluenesulfonamide (manufactured by Fuji Amide Chemical Co., Ltd.)

### Component (D)

· Epikote 828: Epoxy resin (manufactured by Japan Epoxy Resins Co., Ltd.)

### Component (F)

· PM-100: Phenol-modified C-5/C-9 petroleum resin (manufactured by Toho Chemical Industry Co., Ltd.)
· HP-70: Alkyl phenol-modified xylene resin (manufactured by Fudow Corporation)
· YS Polyster T-30: Phenol-modified terpene resin (manufactured by Yasuhara Chemical Co., Ltd.)
· Mightyace G-125: Phenol-modified terpene resin (manufactured by Yasuhara Chemical Co., Ltd.)

### (Block copolymer)

· SBS : Styrene-butadiene-styrene block copolymer

### (Rubber component)

· SBR: Styrene-butadiene rubber

### (Silane coupling agent)

· A-171: Vinyltrimethoxysilane (manufactured by Dow Corning Toray Co., Ltd.)
· A-187: γ-Glycidoxypropyltrimethoxysilane (manufactured by Dow Corning Toray Co., Ltd.)
· A-1120: N-(β-Aminoethyl)-γ-aminopropyltrimethoxysilane (manufactured by Dow Corning Toray Co., Ltd.)

### (Filler)

· Whiton SB (calcium carbonate, manufactured by Shiraishi Calcium Kaisha, Ltd.)
· Fly ash balloon: Fine hollow spherical particles (alumina silicate, manufactured by Tokai Kogyo Co., Ltd.)
· Sepiolite S: Magnesium silicate (manufactured by Nippon Talc Co., Ltd.)
· Silica sand: (manufactured by Maruo Calcium Co., Ltd.)
· Talc: Microace P4 (average particle diameter: 4.5 mm, manufactured by Nippon Talc Co., Ltd.)
· Aggregate

### (Curing catalyst)

· SCAT-1: Organotin compound (manufactured by Sankyo Organic Chemicals Co., Ltd.)

### (Curing agent for epoxy resin)

· H-30: Ketimine curing agent (manufactured by Japan Epoxy Resins Co., Ltd.)

### (Antioxidant)

· Irganox 245: Hindered phenol antioxidant (manufactured by Ciba Specialty Chemicals)

### (Ultraviolet absorber)

· Tinuvin 213: Benzotriazole ultraviolet absorber (manufactured by Ciba Specialty Chemicals)

### (Light stabilizer)

· Sanol LS765: Hindered amine light stabilizer (Sankyo Co., Ltd.)

### (Evaluations of physical properties)

The following items were evaluated.

### <Odor>

During the application of a composition, it was evaluated whether a solvent odor, an asphalt fume, and an asphalt odor were generated or not. When neither an odor nor a fume was generated, the result was represented by "Good" in the tables below. When any of an odor and a fume was generated, the result was represented by "Not good" in the tables below.

### <Curability>

After a composition was applied, the surface of the composition was touched with a spatula at a predetermined time interval to measure the time required until the composition was not adhered to the spatula (at 23°C and 50% R.H.). When the surface was cured within 30 minutes, the result was represented by "Good" in the tables below. When the surface was not cured within 30 minutes, the result was represented by "Not good" in the tables below.

### <Storage stability>

After the curable composition was hermetically sealed and left to stand at 50°C for 30 days, the state of solid-liquid separation was evaluated. When the solid-liquid separation was not observed, the result was represented by "Good" in the tables below. When the solid-liquid separation was observed, the result was represented by "Not good" in the tables below.

### <Waterproof adhesiveness>

A composition was applied on a mortar substrate in a bead shape and cured at 23°C and 50% R.H. for 7 days. Subsequently, the substrate was immersed in water at 23°C for 7 days. Immediately after the substrate was taken out from the water, the boundary between the cured object and the mortar was cut with a knife, and the cured product was peeled off to observe the adhesion state. The state of adhesion was then observed. When the adhesive remained on the mortar side, the result was represented by "Good" in the tables below. When the adhesive did not remain on the mortar side, the result was represented by "Not good" in the tables below.
Mortar: 50 x 50 x 15 mm (manufactured by Engineering Test Service Co., Ltd.)

### <Weather resistance test>

The curable composition was filled in to form a sheet having a thickness of 3 mm. The sheet was left to stand at 23°C for 3 days and was then heated at 50°C for 4 days, thus preparing a rubber sheet. The rubber sheet on an aluminum plate having a thickness of 1 mm was placed in a sunshine weatherometer (manufactured by Suga Test Instruments Co., Ltd.) and weather resistance was evaluated. When degradation was not observed under the sunshine irradiation for 5,000 hours, the result was represented by "Good" in the table below. When degradation was observed under the sunshine irradiation until 5,000 hours, the result was represented by "Not good" in the table below.

### <Workability>

The viscosity of a composition was measured with a BH-type viscometer (rotor: No. 7, rotation speed: 10 rpm, temperature: 23°C). When the viscosity was less than 500 Pa·s, the result was represented by "Good" in the tables below. When the viscosity was 500 Pa·s or more, the result was represented by "Not good" in the tables below.

### <Adhesion test for tiles>

An adhesive was uniformly applied on a mortar substrate having dimensions of 70 x 70 x 20 mm with a comb trowel. Subsequently, a porcelain tile having dimensions of 45 x 45 x 7 mm was bonded to the substrate and the resulting test piece was left to stand for 7 days (at 23°C and 50% R.H.). A jig for a tensile test was attached on the surface of the tile of the test piece with an epoxy adhesive. The tensile test was then performed with an autograph (tensile speed: 5 mm/min). In addition, the test piece was immersed in hot water at 60°C and a saturated aqueous solution of calcium hydroxide at 60°C for 7 days. Immediately after the test piece was taken out from the water or the saturated solution, the tensile test was performed to determine waterproof adhesive strength. The ratio of the adhesive strength after the immersion in the hot water at 60°C to the adhesive strength in the original state was calculated as a waterproof retention. The ratio of the adhesive strength after the immersion in the saturated aqueous solution of calcium hydroxide at 60°C to the adhesive strength in the original state was calculated as an alkali-proof retention.

### (EXAMPLES 1 to 8 and COMPARATIVE EXAMPLES 1 and 2)

Various compounding components were kneaded with a 5-L mixer in the composition shown in Table 1 to prepare curable compositions of Examples 1 to 8 and Comparative Examples 1 and 2.

Table 1 illustrates the evaluation results.

**Table 1**

| | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|
| Component (A) | Straight asphalt | 70 | 50 | 70 | 70 | 70 | 70 | 70 | 70 | | |
| | Blown asphalt | | | | | | | | | 100 | |
| | Cutback asphalt | | | | | | | | | | 100 |
| Component (B) | Polymer A | 50 | 50 | | 50 | 50 | 50 | 50 | 50 | | |
| | Polymer B | | | 50 | | | | | | | |
| Block copolymer | SBS | | | | | | | | | 10 | 10 |
| Component (C) | Mesamoll II | 40 | 40 | 50 | | | | | 40 | | |
| | HB-40 | 10 | 10 | 20 | | | | | 10 | | |
| | DIDP | | | | | 40 | 40 | 40 | | | |
| | Topcizer No. 3 | | | | 40 | | | | | | |
| Component (F) | PM-100 | 5 | 5 | 5 | 5 | | | | | | |
| | HP-70 | | | | | 10 | | | | | |
| | T-30 | | | | | | 10 | | 5 | | |
| | G-125 | | | | | | | 10 | | | |
| Silane coupling agent | A-171 | 1 | 1 | 1 | 1 | 1 | 1 | 1 | 1 | | |
| | A-1120 | 3 | 3 | 3 | 3 | 3 | 3 | 3 | 3 | | |
| Filler | Whiton SB | 100 | 70 | 150 | 100 | 100 | 100 | 100 | 100 | 100 | 100 |
| | Fly ash balloon | 50 | 90 | | 50 | 50 | 50 | 50 | 50 | 50 | 50 |
| Curing catalyst | SCAT-1 | 1 | 1 | 1 | 1 | 1 | 1 | 1 | 1 | | |
| Odor | | Good | Good | Good | Good | Good | Good | Good | Good | Not good | Not good |
| Curability | | Good | Good | Good | Good | Good | Good | Good | Good | Good | Not good |
| Storage stability | | Good | Good | Good | Good | Good | Good | Good | Good | Not good | Good |
| Waterproof adhesiveness | | Good | Good | Good | Good | Good | Good | Good | Good | Not good | Not good |

The curable compositions in the examples did not generate a fume or an odor of asphalt or a solvent odor during the working process, and exhibited satisfactory room temperature curability and satisfactory waterproof adhesiveness to mortar. The level of storage stability was also satisfactory. In contrast, no composition with satisfactorily balanced these characteristics was found in the comparative examples.

### (EXAMPLES 9 and 10 and COMPARATIVE EXAMPLES 3 to 6)

### Comparison of performance as adhesive for tile

Various compounding components were kneaded with a 5-L mixer in the composition shown in Table 2 to prepare adhesives of Examples 9 and 10 and Comparative Examples 3 to 6.

Table 2 illustrates the evaluation results.

**Table 2**

| | | Example 9 | Example 10 | Comparative Example 3 | Comparative Example 4 | Comparative Example 5 | Comparative Example 6 |
|---|---|---|---|---|---|---|---|
| Component (A) | Straight asphalt | 50 | 50 | | | | |
| Component (B) | Polymer A | 100 | | 100 | | | |
| | Polymer B | | 100 | | | | |
| | Polymer C | | | | 100 | | |
| | Polymer D | | | | | 100 | |
| | Polymer E | | | | | | 100 |
| Component (C) | Mesamoll II | 40 | 40 | 70 | 40 | 20 | 20 |
| | HB-40 | | | | | 20 | 20 |
| Component (D) | Epikote 828 | 10 | 10 | 10 | 10 | 10 | 10 |
| (F) Petroleum resin | PM-100 | 10 | 10 | | | | |
| Silane coupling agent | A-171 | 1 | 1 | 1 | 1 | 1 | 1 |
| | A-187 | 3 | 3 | 3 | 3 | 3 | 3 |
| Filler | Whiton SB | 200 | 200 | 200 | 200 | 200 | 200 |
| | Sepiolite S | 5 | 5 | 5 | 5 | 5 | 5 |
| | Silica sand | 50 | 50 | 50 | 100 | 100 | 100 |
| Curing catalyst | SCAT-1 | 1 | 1 | 1 | 1 | 1 | 1 |
| Curing agent for epoxy resin | Epikure H-30 | 5 | 5 | 5 | 5 | 5 | 5 |
| Adhesive strength of tile | Original state (MPa) | 1.2 | 1.3 | 1.3 | 1.4 | 1.5 | 1.3 |
| | After immersing in water (MPa) | 1.0 | 1.1 | 0.8 | 0. 9 | 1. 0 | 0. 8 |
| | After immersing in alkali (MPa) | 0.9 | 0.9 | 0.5 | 0.6 | 0.7 | 0.6 |
| | Waterproof retention (%) | 83 | 84 | 62 | 64 | 67 | 62 |
| | Alkali-proof retention (%) | 75 | 71 | 41 | 43 | 47 | 46 |

The adhesives in the examples exhibited satisfactory adhesive strength in any state of the original state, the state after being immersed in water, and the state after being immersed in an aqueous solution of calcium hydroxide. Thus they had satisfactory adhesiveness and durability. In contrast, although the adhesives in the comparative examples exhibited satisfactory adhesive strength in the original state, the adhesive strength was drastically decreased after the adhesives were immersed in water.

### (EXAMPLES 11 and 12 and COMPARATIVE EXAMPLES 7 to 9)

### Comparison of performance as waterproof material

Various compounding components were kneaded with a 5-L mixer in the composition shown in Table 3 to prepare waterproof materials of Examples 11 and 12 and Comparative Examples 7 to 9.

Table 3 illustrates the evaluation results.

**Table 3**

| | | Example 11 | Example 12 | Comparative Example 7 | Comparative Example 8 | Comparative Example 9 |
|---|---|---|---|---|---|---|
| Component (A) | Straight asphalt | 70 | 70 | 20 | | |
| | Blown asphalt | | | 80 | 100 | |
| | Cutback asphalt | | | | | 100 |
| Component (B) | Polymer A | 50 | | | | |
| | Polymer B | | 50 | | | |
| Block copolymer | SBS | | | 10 | 10 | 10 |
| Component (C) | Mesamoll II | 40 | 40 | | | |
| Component (F) | PM-100 | 5 | 5 | | | |
| Silane coupling agent | A-171 | 1 | 1 | | | |
| | A-1120 | 2 | 2 | | | |
| Filler | Whiton SB | 100 | 70 | 200 | 200 | 200 |
| | Fly ash balloon | 50 | 90 | | | |
| Curing catalyst | SCAT-1 | 1 | 1 | | | |
| Workability | | Good | Good | Not good | Not good | Not good |
| Odor | | Good | Good | Not good | Not good | Not good |
| Curability | | Good | Good | Good | Good | Not good |
| Storage stability | | Good | Good | Not good | Not good | Good |

The waterproof material compositions in the examples did not generate a fume or an odor of asphalt or a solvent odor during the working process, had a low viscosity enough to provide satisfactory workability, and exhibited satisfactory room temperature curability. The level of storage stability was also satisfactory. In contrast, no composition with satisfactory balanced characteristics was found in the comparative examples.

### (EXAMPLES 13 and 14 and COMPARATIVE EXAMPLES 10 to 13)

### Comparison of performance as sealing material composition

Various compounding components were kneaded with a 5-L mixer in the composition shown in Table 4 to prepare sealing material compositions of Examples 13 and 14 and Comparative Examples 10 to 13.

Table 4 illustrates the evaluation results.

**Table 4**

| | | Example 13 | Example 14 | Comparative Example 10 | Comparative Example 11 | Comparative Example 12 | Comparative Example 13 |
|---|---|---|---|---|---|---|---|
| Component (A) | Straight asphalt | 50 | 50 | | | | |
| Component (B) | Polymer A | 100 | | 100 | | | |
| | Polymer B | | 100 | | | | |
| | Polymer C | | | | 100 | | |
| | Polymer D | | | | | 100 | |
| | Polymer E | | | | | | 100 |
| Component (C) | Mesamoll II | 40 | 40 | 90 | 40 | 20 | 20 |
| | HB-40 | | | | | 20 | 20 |
| Component (F) | PM-100 | 10 | 10 | | | | |
| Silane coupling agent | A-171 | 1 | 1 | 1 | 1 | 1 | 1 |
| | A-1120 | 2 | 2 | 2 | 2 | 2 | 2 |
| Filler | Whiton SB | 200 | 200 | 200 | 200 | 200 | 200 |
| Antioxidant | Irganox 245 | 1 | 1 | 1 | 1 | 1 | 1 |
| Ultraviolet absorber | Tinuvin 213 | 1 | 1 | 1 | 1 | 1 | 1 |
| Light stabilizer | Sanol LS765 | 1 | 1 | 1 | 1 | 1 | 1 |
| Curing catalyst | SCAT-1 | 1 | 1 | 1 | 1 | 1 | 1 |
| Weather resistance | | Good | Good | Not good | Not good | Not good | Not good |
| Waterproof adhesiveness | | Good | Good | Not good | Not good | Not good | Not good |

The sealing material compositions in the examples exhibited satisfactory waterproof adhesiveness and weather resistance. In contrast, all the compositions in the comparative examples showed unsatisfactory results.

### (EXAMPLES 15 and 16 and COMPARATIVE EXAMPLES 14 and 15)

Various compounding components were kneaded with a 5-L mixer in the composition shown in Table 5 to prepare damping materials of Examples 15 and 16 and Comparative Examples 14 and 15.

Table 5 illustrates the evaluation results.

**Table 5**

| | | Example 15 | Example 16 | Comparative Example 14 | Comparative Example 15 |
|---|---|---|---|---|---|
| Component (A) | Straight asphalt | 70 | 70 | 100 | |
| | Blown asphalt | | | | 100 |
| Component (B) | Polymer A | 50 | | | |
| | Polymer B | | 50 | | |
| Component (C) | Mesamoll II | 40 | 40 | | |
| Component (F) | PM-100 | 5 | 5 | | |
| Rubber component | SBR | | | 15 | 15 |
| Silane coupling agent | A-171 | 1 | 1 | | |
| | A-1120 | 2 | 2 | | |
| Filler | Whiton SB | 100 | 100 | 150 | 150 |
| | Fly ash balloon | 50 | 50 | 50 | 50 |
| Curing catalyst | SCAT-1 | 1 | 1 | | |
| Workability | | Good | Good | Not good | Not good |
| Odor | | Good | Good | Not good | Not good |
| Curability | | Good | Good | Good | Good |
| Storage stability | | Good | Good | Not good | Not good |

In the damping materials in the examples, since heat-melting is not needed upon applying asphalts, problems as to thermal fluidity were not occurred. Furthermore, the damping materials in the examples had a low viscosity enough to provide satisfactory workability and exhibited satisfactory room temperature curability. The level of storage stability was also satisfactory.

### (Blending example of road-paving material)

A blending example when the curable composition of the present invention is used as a road-paving material is described below.

| | |
|---|---|
| Straight asphalt 150 to 200: | 140 parts by weight |
| Polymer A: | 100 parts by weight |
| Mesamoll: | 70 parts by weight |
| PM-100: | 10 parts by weight |
| A-171: | 2 parts by weight |
| A-1120: | 3 parts by weight |
| Aggregate: | 200 parts by weight |
| SCAT-1: | 2 parts by weight |

## Claims

1. A curable composition comprising:
a bituminous substance (A); and
a vinyl polymer (B) having a reactive silicon group represented by the general formula (1):
-Si-(R¹₃₋ₐ)Yₐ ··· (1)
(in the formula, R¹ represents an alkyl group having 1 to 20 carbon atoms, an aryl group having 6 to 20 carbon atoms, an aralkyl group having 7 to 20 carbon atoms, or a triorganosiloxy group represented by (R'O)₃Si-(wherein R' represents a monovalent hydrocarbon group having 1 to 20 carbon atoms and the three R's may be the same or different), and when two R¹s are present, they may be the same or different;
Y represents a hydroxyl group or a hydrolyzable group, and when two or more Ys are present, they may be the same or different; and
a represents 1, 2, or 3),
said vinyl polymer (B) having a main chain produced by living radical polymerization.

2. The curable composition according to claim 1,
wherein the main chain of the vinyl polymer (B) is produced by polymerizing mainly at least one monomer selected from the group consisting of (meth)acrylic monomers, acrylonitrile monomers, aromatic vinyl monomers, fluorine-containing vinyl monomers, and silicon-containing vinyl monomers.

3. The curable composition according to claim 1 or claim 2,
wherein the main chain of the vinyl polymer (B) is a (meth)acrylic polymer.

4. The curable composition according to any one of claims 1 to 3,
wherein the main chain of the vinyl polymer (B) is an acrylic polymer.

5. The curable composition according to claim 4,
wherein the main chain of the vinyl polymer (B) is an acrylate polymer.

6. The curable composition according to any one of claims 1 to 5,
wherein the main chain of the vinyl polymer (B) is produced by atom transfer radical polymerization.

7. The curable composition according to claim 6,
wherein, in the atom transfer radical polymerization, a complex selected from transition metal complexes containing, as a central metal, an element selected from Group 7, Group 8, Group 9, Group 10, and Group 11 in the periodic table is used as a catalyst.

8. The curable composition according to claim 7,
wherein the complex used as the catalyst is a complex selected from the group consisting of complexes of copper, nickel, ruthenium, or iron.

9. The curable composition according to any one of claims 1 to 8,
further comprising a plasticizer (C).

10. The curable composition according to claim 9,
wherein the plasticizer (C) is an aromatic oligomer or a completely or partially hydrogenated product of an aromatic oligomer.

11. The curable composition according to claim 9,
wherein the plasticizer (C) is a sulfonate compound or a sulfonamide compound.

12. The curable composition according to any one of claims 1 to 11,
further comprising an epoxy resin (D).

13. The curable composition according to claim 12,
wherein the content of the epoxy resin (D) is 5 to 120 parts by weight relative to 100 parts by weight of the bituminous substance (A).

14. The curable composition according to any one of claims 1 to 13,
further comprising an alkyl (meth)acrylate polymer (E).

15. The curable composition according to claim 14,
wherein the molecular chain of the alkyl (meth)acrylate polymer (E) is a copolymer including
- an alkyl (meth)acrylate monomer unit (a) containing an alkyl group having 1 to 8 carbon atoms; and
- an alkyl (meth)acrylate monomer unit (b) containing an alkyl group having at least 10 carbon atoms.

16. The curable composition according to any one of claims 1 to 15,
further comprising a tackifier resin (F).

17. The curable composition according to claim 16,
wherein the tackifier resin (F) is a tackifier resin modified with phenol and/or an alkyl phenol.

18. The curable composition according to any one of claims 1 to 17,
wherein the bituminous substance (A) comprises a natural asphalts and/or a petroleum asphalts.

19. An adhesive for tiles, comprising
the curable composition according to any one of claims 1 to 18.

20. A waterproof material comprising
the curable composition according to any one of claims 1 to 18.

21. A road-paving material comprising
the curable composition according to any one of claims 1 to 18.

22. A water-stopping material for civil engineering,
the water-stopping material comprising the curable composition according to any one of claims 1 to 18.

23. A damping material comprising
the curable composition according to any one of claims 1 to 18.
